# EUROPEAN PATENT SPECIFICATION

(11) **EP 2 584 515 B1**
(45) Date of publication and mention of the grant of the patent: **10.06.2020**
(21) Application number: 10853218.5
(22) Date of filing: 15.06.2010
(51) Int. Cl.: G01C 21/36

(54) **NAVIGATION SYSTEM, TERMINAL APPARATUS, NAVIGATION SERVER, NAVIGATION APPARATUS, NAVIGATION METHOD, AND PROGRAM**
NAVIGATIONSSYSTEM, ENDGERÄTEVORRICHTUNG, NAVIGATIONSSERVER, NAVIGATIONSVORRICHTUNG, NAVIGATIONSVERFAHREN UND PROGRAMM
SYSTÈME DE NAVIGATION, APPAREIL TERMINAL, SERVEUR DE NAVIGATION, APPAREIL DE NAVIGATION, PROCÉDÉ DE NAVIGATION ET PROGRAMME

(43) Date of publication of application: 24.04.2013
(73) Proprietor: Navitime Japan Co., Ltd., Tokyo 107-0062 (JP)
(72) Inventor: UETAKE, Kosuke, Tokyo 107-0062 (JP)
(74) Representative: Hoffmann Eitle
(86) International application number: PCT/JP2010/060144
(87) International publication number: WO 2011/158336

(56) References cited:
- JP-A- 2000 285 121
- JP-A- 2002 228 477
- JP-A- 2004 070 598
- JP-A- 2005 077 929
- JP-A- 2008 190 941
- JP-A- 2008 209 164
- JP-A- 2008 217 418
- HILE H ET AL: "Positioning and Orientation in Indoor Environments Using Camera Phones", IEEE COMPUTER GRAPHICS AND APPLICATIONS, IEEE SERVICE CENTER, NEW YORK, NY, US, vol. 28, no. 4, 1 July 2008 (2008-07-01), pages 32-39, XP011229501, ISSN: 0272-1716, DOI: 10.1109/MCG.2008.80

## Description

### TECHNICAL FIELD

The present invention relates to a navigation system, a terminal apparatus, a navigation server, a navigation apparatus, a navigation method, and a computer program product.

### BACKGROUND ART

Document Hile et. at. "Positioning and Orientation in Indoor Environments Using Camera Phones" discloses a system representing the closest prior art.

### DISCLOSURE OF INVENTION

### PROBLEM TO BE SOLVED BY THE INVENTION

In such conventional techniques, there is a problem in that, for example, when places having the same name are present, a situation occurs in which narrowing down a search to one place from a read image may not be performed, and a data search for a place that is necessary to a user may not be performed with accuracy.

The present invention is devised in view of the problem, and an object thereof is to provide a navigation system, a terminal apparatus, a navigation server, a navigation apparatus, a navigation method, and a computer program product that are capable of providing an operation screen that enables a user to select an arbitrary place that is present in a photographed image as an input unit of data search conditions and accurately performing a data search for a place selected on the operation screen in an easy manner.

### MEANS FOR SOLVING PROBLEM

The above object is solved by the subject matter of the independent claims where advantageous embodiments are described in the claims. Examples and technical descriptions of apparatuses, products and/or methods in the description and/or drawings which are not covered by the claims are presented not as embodiments of the invention but as background art or examples useful for understanding the invention.

In order to attain this object, a navigation apparatus according to one aspect of the present invention is a navigation apparatus comprising a photographing unit, a display unit, an input unit, a control unit, and a storage unit, wherein the storage unit includes a map data storage unit that stores map data of a map that at least includes name information representing names of specific places, and a guide information storage unit that stores guide information of the specific places, and wherein the control unit includes a photographed image acquiring unit that acquires a photographed image by controlling the photographing unit, an image identifying unit that identifies a display content from the photographed image that is acquired by the photographed image acquiring unit and specifies at least a part of the map data corresponding to the photographed image from the map data storage unit based on the identified display content, an operation screen generating unit that generates an operation screen, used for selecting the specific place, having display areas of the name information that is included in the map data set as selectable areas using the map data that is specified by the image identifying unit, an operation screen displaying unit that displays at least a part of the operation screen that is generated by the operation screen generating unit on the display unit, a name information setting unit that sets the name information that corresponds to the selectable area that is selected using the display unit through the input unit out of the selectable areas displayed by the operation screen displaying unit on the operation screen, a guide screen generating unit that extracts the guide information that coincides with the name information from the guide information storage unit based on the name information that is set by the name information setting unit and generates a guide screen that includes at least a part of the extracted guide information, and a guide screen displaying unit that displays at least a part of the guide screen that is generated by the guide screen generating unit on the display unit.

A navigation apparatus according to another aspect of the present invention is the navigation apparatus, wherein the name information is information that represents at least one of a station name, a facility name, a prefecture name, a city name, a ward name, town name, village name, and a street name.

The navigation apparatus according to still another aspect of the present invention is the navigation apparatus, wherein the image identifying unit specifies at least a part of the map data that corresponds to the photographed image from the map data storage unit by specifying a place that corresponds to a photographed area of the photographed image by referring to the map data stored in the map data storage unit based on at least one of a character string, an arrangement of the character string, and a symbol that are included in the display content.

The navigation apparatus according to still another aspect of the present invention is the navigation apparatus, wherein the storage unit further includes a character string arrangement information storage unit that stores character string arrangement information relating to a character string of the map and an arrangement of the character string, and wherein the image identifying unit extracts the character string arrangement information that corresponds to at least one of the character string and the arrangement of the character string that are included in the display content from the character string arrangement information storage unit and specifies at least a part of the map data that corresponds to the photographed image from the map data storage unit based on the extracted character string arrangement information.

The navigation apparatus according to still another aspect of the present invention is the navigation apparatus, wherein the storage unit further includes a symbol information storage unit that stores symbol information that relates to a symbol that is used in the map, and wherein the image identifying unit extracts the symbol information that corresponds to the symbol included in the display content from the symbol information storage unit and specifies at least a part of the map data that corresponds to the photographed image from the map data storage unit based on the extracted symbol information.

The navigation apparatus according to still another aspect of the present invention is the navigation apparatus, wherein the operation screen generating unit generates the operation screen having display areas of the name information included in the map data set as selectable areas on the photographed image by using the photographed image acquired by the photographed image acquiring unit and the map data specified by the image identifying unit.

The navigation apparatus according to still another aspect of the present invention is the navigation apparatus, wherein the guide information further includes time table data of means of transportation, and wherein the guide screen generating unit extracts the time table data that corresponds to the station name from the guide information storage unit and generates the guide screen that includes the extracted time table data when the name information set by the name information setting unit represents the station name.

The navigation apparatus according to still another aspect of the present invention is the navigation apparatus, wherein the guide information further includes poi information of a facility, and wherein the guide screen generating unit extracts the poi information that corresponds to the facility name from the guide information storage unit and generates the guide screen that includes the extracted poi information when the name information set by the name information setting unit represents the facility name.

The navigation apparatus according to still another aspect of the present invention is the navigation apparatus, wherein the storage unit further includes a traffic network data storage unit that stores traffic network data, wherein the name information setting unit sets the name information that corresponds to the selectable area selected using the display unit through the input unit as a point of departure or a destination, wherein the control unit further includes a guide route searching unit that searches for a guide route that includes the point of departure or the destination set by the name information setting unit using the traffic network data stored in the traffic network data storage unit and generates guide route data, and wherein the guide screen generating unit generates the guide screen that includes the guide route data generated by the guide route searching unit.

The navigation apparatus according to still another aspect of the present invention is the navigation apparatus, wherein the control unit further includes a current position information acquiring unit that acquires current position information of a user using the navigation apparatus, wherein the name information setting unit sets the current position information that is acquired by the current position information acquiring unit as the point of departure and sets the name information that corresponds to the selectable area selected using the display unit through the input unit as the destination, and wherein the guide route searching unit searches for the guide route that is from the point of departure to the destination set by the name information setting unit using the traffic network data that is stored in the traffic network data storage unit and generates the guide route data.

The navigation apparatus according to still another aspect of the present invention is the navigation apparatus, wherein the input unit is a touch panel.

The navigation apparatus according to still another aspect of the present invention is the navigation apparatus, wherein the photographed image includes a still image and a moving image.

The navigation system according to still another aspect of the present invention is a navigation system that connects a navigation server comprising a control unit and a storage unit and a terminal apparatus comprising a photographing unit, a display unit, an input unit, and a control unit to each other in a communicable manner, wherein the storage unit of the navigation server includes a map data storage unit that stores map data of a map that at least includes name information representing names of specific places, and a guide information storage unit that stores guide information of the specific places, and wherein the control unit of the navigation server includes a display content receiving unit that receives a display content of a photographed image that is transmitted from the terminal apparatus, an image identifying unit that specifies at least a part of the map data that corresponds to the photographed image from the map data storage unit based on the display content that is received by the display content receiving unit, a map data transmitting unit that transmits the map data that is specified by the image identifying unit to the terminal apparatus, a name information receiving unit that receives the name information that is transmitted from the terminal apparatus, a guide information extracting unit that extracts the guide information that coincides with the name information from the guide information storage unit based on the name information that is received by the name information receiving unit, and a guide information transmitting unit that transmits the guide information that is extracted by the guide information extracting unit to the terminal apparatus, wherein the control unit of the terminal apparatus includes a photographed image acquiring unit that acquires a photographed image by controlling the photographing unit, a display content extracting unit that extracts the display content from the photographed image that is acquired by the photographed image acquiring unit, a display content transmitting unit that transmits the display content that is extracted by the display content extracting unit to the navigation server, a map data receiving unit that receives the map data transmitted from the navigation server, an operation screen generating unit that generates an operation screen, used for selecting the specific place, having display areas of the name information that is included in the map data set as selectable areas using the map data that is received by the map data receiving unit, an operation screen displaying unit that displays at least a part of the operation screen that is generated by the operation screen generating unit on the display unit, a name information setting unit that sets the name information that corresponds to the selectable area that is selected using the display unit through the input unit out of the selectable areas displayed by the operation screen displaying unit on the operation screen, a name information transmitting unit that transmits the name information that is set by the name information setting unit to the navigation server, a guide information receiving unit that receives the guide information that is transmitted from the navigation server, a guide screen generating unit that generates a guide screen that includes at least a part of the guide information that is received by the guide information receiving unit, and a guide screen displaying unit that displays at least a part of the guide screen that is generated by the guide screen generating unit on the display unit.

The terminal apparatus according to still another aspect of the present invention is a terminal apparatus that is connected to a navigation server in a communicable manner, the apparatus comprising a photographing unit, a display unit, an input unit, and a control unit, wherein the control unit includes a photographed image acquiring unit that acquires a photographed image by controlling the photographing unit, a display content extracting unit that extracts the display content from the photographed image that is acquired by the photographed image acquiring unit, a display content transmitting unit that transmits the display content that is extracted by the display content extracting unit to the navigation server, a map data receiving unit that receives the map data transmitted from the navigation server, an operation screen generating unit that generates an operation screen, used for selecting the specific place, having display areas of name information that is included in the map data set as selectable areas using the map data that is received by the map data receiving unit, an operation screen displaying unit that displays at least a part of the operation screen that is generated by the operation screen generating unit on the display unit, a name information setting unit that sets the name information that corresponds to the selectable area that is selected using the display unit through the input unit out of the selectable areas displayed by the operation screen displaying unit on the operation screen, a name information transmitting unit that transmits the name information that is set by the name information setting unit to the navigation server, a guide information receiving unit that receives the guide information that is transmitted from the navigation server, a guide screen generating unit that generates a guide screen that includes at least a part of the guide information that is received by the guide information receiving unit, and a guide screen displaying unit that displays at least a part of the guide screen that is generated by the guide screen generating unit on the display unit.

The navigation server according to still another aspect of the present invention is a navigation server that is connected to a terminal apparatus in a communicable manner, the server comprising a control unit, and a storage unit, wherein the storage unit includes a map data storage unit that stores map data of a map that at least includes name information representing names of specific places, and a guide information storage unit that stores guide information of the specific places, and wherein the control unit includes a display content receiving unit that receives a display content of a photographed image that is transmitted from the terminal apparatus, an image identifying unit that specifies at least a part of the map data that corresponds to the photographed image from the map data storage unit based on the display content that is received by the display content receiving unit, a map data transmitting unit that transmits the map data that is specified by the image identifying unit to the terminal apparatus, a name information receiving unit that receives the name information that is transmitted from the terminal apparatus, a guide information extracting unit that extracts the guide information that coincides with the name information from the guide information storage unit based on the name information that is received by the name information receiving unit, and a guide information transmitting unit that transmits the guide information that is extracted by the guide information extracting unit to the terminal apparatus.

The navigation server according to still another aspect of the present invention is a navigation server comprising a control unit, and a storage unit that are connected to a terminal apparatus comprising a display unit in a communicable manner, wherein the storage unit includes a map data storage unit that stores map data of a map that at least includes name information representing names of specific places, and a guide information storage unit that stores guide information of the specific places, and wherein the control unit includes a photographed image receiving unit that receives a photographed image that is transmitted from the terminal apparatus, an image identifying unit that identifies a display content from the photographed image that is received by the photographed image receiving unit and specifies at least a part of the map data that corresponds to the photographed image from the map data storage unit based on the identified display content, an operation screen generating unit that generates an operation screen, used for selecting the specific place, having display areas of the name information that is included in the map data set as selectable areas using the map data that is specified by the image identifying unit, an operation screen display controlling unit that displays the operation screen on the display unit by transmitting the operation screen that is generated by the operation screen generating unit to the terminal apparatus, a name information receiving unit that receives the name information that corresponds to the selectable area transmitted from the terminal apparatus, a guide screen generating unit that extracts the guide information that coincides with the name information from the guide information storage unit based on the name information that is received by the name information receiving unit and generates a guide screen that includes at least a part of the extracted guide information, and a guide screen display controlling unit that displays the guide screen on the display unit by transmitting the guide screen that is generated by the guide screen generating unit to the terminal apparatus.

The navigation method according to still another aspect of the present invention is a navigation method executed by a navigation apparatus including a photographing unit, a display unit, an input unit, a control unit, and a storage unit, wherein the storage unit includes a map data storage unit that stores map data of a map that at least includes name information representing names of specific places, and a guide information storage unit that stores guide information of the specific places, the method executed by the control unit comprising a photographed image acquiring step of acquiring a photographed image by controlling the photographing unit, an image identifying step of identifying a display content from the photographed image that is acquired at the photographed image acquiring step and specifies at least a part of the map data corresponding to the photographed image from the map data storage unit based on the identified display content, an operation screen generating step of generating an operation screen, used for selecting the specific place, having display areas of the name information that is included in the map data set as selectable areas using the map data that is specified at the image identifying step, an operation screen displaying step of displaying at least a part of the operation screen that is generated at the operation screen generating step on the display unit, a name information setting step of setting the name information that corresponds to the selectable area that is selected using the display unit through the input unit out of the selectable areas displayed at the operation screen displaying step on the operation screen, a guide screen generating step of extracting the guide information that coincides with the name information from the guide information storage unit based on the name information that is set at the name information setting step and generating a guide screen that includes at least a part of the extracted guide information, and a guide screen displaying step of displaying at least a part of the guide screen that is generated by the guide screen generating step on the display unit.

The navigation method according to still another aspect of the present invention is a navigation method that is performed in a navigation system that connects a navigation server including a control unit and a storage unit and a terminal apparatus including a photographing unit, a display unit, an input unit, and a control unit to each other in a communicable manner, wherein the storage unit of the navigation server includes a map data storage unit that stores map data of a map that at least includes name information representing names of specific places, and a guide information storage unit that stores guide information of the specific places, the method comprising a photographed image acquiring step of acquiring a photographed image by controlling the photographing unit that is performed by the control unit of the terminal apparatus, a display content extracting step of extracting the display content from the photographed image that is acquired at the photographed image acquiring step that is performed by the control unit of the terminal apparatus, a display content transmitting step of transmitting the display content that is extracted at the display content extracting step to the navigation server that is performed by the control unit of the terminal apparatus, a display content receiving step of receiving the display content of the photographed image that is transmitted from the terminal apparatus at the display content transmitting step that is performed by the control unit of the navigation server, an image identifying step of specifying at least a part of the map data that corresponds to the photographed image from the map data storage unit based on the display content that is received at the display content receiving step that is performed by the control unit of the navigation server, a map data transmitting step of transmitting the map data that is specified at the image identifying step to the terminal apparatus that is performed by the control unit of the navigation server, a map data receiving step of receiving the map data transmitted from the navigation server at the map data transmitting step that is performed by the control unit of the terminal apparatus, an operation screen generating step of generating an operation screen, used for selecting the specific place, having display areas of the name information that is included in the map data set as selectable areas using the map data that is received at the map data receiving step that is performed by the control unit of the terminal apparatus, an operation screen displaying step of displaying at least a part of the operation screen that is generated at the operation screen generating step on the display unit that is performed by the control unit of the terminal apparatus, a name information setting step of setting the name information that corresponds to the selectable area that is selected using the display unit through the input unit out of the selectable areas on the operation screen that are displayed at the operation screen displaying step that is performed by the control unit of the terminal apparatus, a name information transmitting step of transmitting the name information that is set at the name information setting step to the navigation server that is performed by the control unit of the terminal apparatus, a name information receiving step of receiving the name information that is transmitted from the terminal apparatus at the name information transmitting step that is performed by the control unit of the navigation server, a guide information extracting step of extracting the guide information that coincides with the name information from the guide information storage unit based on the name information that is received at the name information receiving step that is performed by the control unit of the navigation server, a guide information transmitting step of transmitting the guide information that is extracted at the guide information extracting step to the terminal apparatus that is performed by the control unit of the navigation server, a guide information receiving step of receiving the guide information that is transmitted from the navigation server at the guide information transmitting step that is performed by the control unit of the terminal apparatus, a guide screen generating step of generating a guide screen that includes at least a part of the guide information that is received at the guide information receiving step that is performed by the control unit of the terminal apparatus, and a guide screen displaying step of displaying at least a part of the guide screen that is generated at the guide screen generating step on the display unit that is performed by the control unit of the terminal apparatus.

The navigation method according to still another aspect of the present invention is a navigation method executed by a terminal apparatus that is connected to a navigation server in a communicable manner, the apparatus including a photographing unit, a display unit, an input unit, and a control unit, the method executed by the control unit comprising a photographed image acquiring step of acquiring a photographed image by controlling the photographing unit, a display content extracting step of extracting the display content from the photographed image that is acquired at the photographed image acquiring step, a display content transmitting step of transmitting the display content that is extracted at the display content extracting step to the navigation server, a map data receiving step of receiving the map data transmitted from the navigation server, an operation screen generating step of generating an operation screen, used for selecting the specific place, having display areas of name information that is included in the map data set as selectable areas using the map data that is received at the map data receiving step, an operation screen displaying step of displaying at least a part of the operation screen that is generated at the operation screen generating step on the display unit, a name information setting step of setting the name information that corresponds to the selectable area that is selected using the display unit through the input unit out of the selectable areas displayed at the operation screen displaying step on the operation screen, a name information transmitting step of transmitting the name information that is set at the name information setting step to the navigation server, a guide information receiving step of receiving the guide information that is transmitted from the navigation server, a guide screen generating step of generating a guide screen that includes at least a part of the guide information that is received at the guide information receiving step, and a guide screen displaying step of displaying at least a part of the guide screen that is generated at the guide screen generating step on the display unit.

The navigation method according to still another aspect of the present invention is a navigation method executed by a navigation server that is connected to a terminal apparatus in a communicable manner, the server including, a control unit, and a storage unit, wherein the storage unit includes a map data storage unit that stores map data of a map that at least includes name information representing names of specific places, and a guide information storage unit that stores guide information of the specific places, the method executed by the control unit comprising a display content receiving step of receiving a display content of a photographed image that is transmitted from the terminal apparatus, an image identifying step of specifying at least a part of the map data that corresponds to the photographed image from the map data storage unit based on the display content that is received at the display content receiving step, a map data transmitting step of transmitting the map data that is specified at the image identifying step to the terminal apparatus, a name information receiving step of receiving the name information that is transmitted from the terminal apparatus, a guide information extracting step of extracting the guide information that coincides with the name information from the guide information storage unit based on the name information that is received at the name information receiving step, and a guide information transmitting step of transmitting the guide information that is extracted at the guide information extracting step to the terminal apparatus.

The navigation method according to still another aspect of the present invention is a navigation method executed by a navigation server including a control unit, and a storage unit that are connected to a terminal apparatus including a display unit in a communicable manner, wherein the storage unit includes a map data storage unit that stores map data of a map that at least includes name information representing names of specific places, and a guide information storage unit that stores guide information of the specific places, the method executed by the control unit comprising a photographed image receiving step of receiving a photographed image that is transmitted from the terminal apparatus, an image identifying step of identifying a display content from the photographed image that is received at the photographed image receiving step and specifies at least a part of the map data that corresponds to the photographed image from the map data storage unit based on the identified display content, an operation screen generating step of generating an operation screen, used for selecting the specific place, having display areas of the name information that is included in the map data set as selectable areas using the map data that is specified at the image identifying step, an operation screen display controlling step of displaying the operation screen on the display unit by transmitting the operation screen that is generated at the operation screen generating step to the terminal apparatus, a name information receiving step of receiving the name information that corresponds to the selectable area transmitted from the terminal apparatus, a guide screen generating step of extracting the guide information that coincides with the name information from the guide information storage unit based on the name information that is received at the name information receiving step and generates a guide screen that includes at least a part of the extracted guide information, and a guide screen display controlling step of displaying the guide screen on the display unit by transmitting the guide screen that is generated at the guide screen generating step to the terminal apparatus.

The computer program product according to still another aspect of the present invention is a computer program product having a non-transitory computer readable mediums including programmed instructions for a navigation method executed by a navigation apparatus including a photographing unit, a display unit, an input unit, a control unit, and a storage unit, wherein the storage unit includes a map data storage unit that stores map data of a map that at least includes name information representing names of specific places, and a guide information storage unit that stores guide information of the specific places, wherein the instructions, when executed by the control unit, cause the control unit to execute a photographed image acquiring step of acquiring a photographed image at controlling the photographing unit, an image identifying step of identifying a display content from the photographed image that is acquired at the photographed image acquiring step and specifies at least a part of the map data corresponding to the photographed image from the map data storage unit based on the identified display content, an operation screen generating step of generating an operation screen, used for selecting the specific place, having display areas of the name information that is included in the map data set as selectable areas using the map data that is specified at the image identifying step, an operation screen displaying step of displaying at least a part of the operation screen that is generated at the operation screen generating step on the display unit, a name information setting step of setting the name information that corresponds to the selectable area that is selected using the display unit through the input unit out of the selectable areas displayed at the operation screen displaying step on the operation screen, a guide screen generating step of extracting the guide information that coincides with the name information from the guide information storage unit based on the name information that is set at the name information setting step and generating a guide screen that includes at least a part of the extracted guide information, and a guide screen displaying step of displaying at least a part of the guide screen that is generated at the guide screen generating step on the display unit.

The computer program product according to still another aspect of the present invention is a computer program product having a non-transitory computer readable mediums including programmed instructions for a navigation method executed by a terminal apparatus that is connected to a navigation server in a communicable manner, the apparatus including a photographing unit, a display unit, an input unit, and a control unit, wherein the instructions, when executed by the control unit, cause the control unit to execute a photographed image acquiring step of acquires a photographed image by controlling the photographing unit, a display content extracting step of extracts the display content from the photographed image that is acquired at the photographed image acquiring step, a display content transmitting step of transmits the display content that is extracted at the display content extracting step to the navigation server, a map data receiving step of receives the map data transmitted from the navigation server, an operation screen generating step of generates an operation screen, used for selecting the specific place, having display areas of name information that is included in the map data set as selectable areas using the map data that is received at the map data receiving step, an operation screen displaying step of displays at least a part of the operation screen that is generated at the operation screen generating step on the display unit, a name information setting step of sets the name information that corresponds to the selectable area that is selected using the display unit through the input unit out of the selectable areas displayed at the operation screen displaying step on the operation screen, a name information transmitting step of transmits the name information that is set at the name information setting step to the navigation server, a guide information receiving step of receives the guide information that is transmitted from the navigation server, a guide screen generating step of generates a guide screen that includes at least a part of the guide information that is received at the guide information receiving step, and a guide screen displaying step of displays at least a part of the guide screen that is generated at the guide screen generating step on the display unit.

The computer program product according to still another aspect of the present invention is a computer program product having a non-transitory computer readable mediums including programmed instructions for a navigation method executed by a navigation server that is connected to a terminal apparatus in a communicable manner, the server including a control unit, and a storage unit, wherein the storage unit includes a map data storage unit that stores map data of a map that at least includes name information representing names of specific places, and a guide information storage unit that stores guide information of the specific places, wherein the instructions, when executed by the control unit, cause the control unit to execute a display content receiving step of receiving a display content of a photographed image that is transmitted from the terminal apparatus, an image identifying step of specifying at least a part of the map data that corresponds to the photographed image from the map data storage unit based on the display content that is received at the display content receiving step, a map data transmitting step of transmitting the map data that is specified at the image identifying step to the terminal apparatus, a name information receiving step of receiving the name information that is transmitted from the terminal apparatus, a guide information extracting step of extracting the guide information that coincides with the name information from the guide information storage unit based on the name information that is received at the name information receiving step, and a guide information transmitting step of transmitting the guide information that is extracted at the guide information extracting step to the terminal apparatus.

The computer program product according to still another aspect of the present invention is a computer program product having a non-transitory computer readable mediums including programmed instructions for a navigation method executed by a navigation server including a control unit, and a storage unit that are connected to a terminal apparatus including a display unit in a communicable manner, wherein the storage unit includes a map data storage unit that stores map data of a map that at least includes name information representing names of specific places, and a guide information storage unit that stores guide information of the specific places, wherein the instructions, when executed by the control unit, cause the control unit to execute a photographed image receiving step of receives a photographed image that is transmitted from the terminal apparatus, an image identifying step of identifies a display content from the photographed image that is received at the photographed image receiving unit and specifies at least a part of the map data that corresponds to the photographed image from the map data storage unit based on the identified display content, an operation screen generating step of generates an operation screen, used for selecting the specific place, having display areas of the name information that is included in the map data set as selectable areas using the map data that is specified at the image identifying unit, an operation screen display controlling step of displays the operation screen on the display unit by transmitting the operation screen that is generated at the operation screen generating unit to the terminal apparatus, a name information receiving step of receives the name information that corresponds to the selectable area transmitted from the terminal apparatus, a guide screen generating step of extracts the guide information that coincides with the name information from the guide information storage unit based on the name information that is received at the name information receiving unit and generates a guide screen that includes at least a part of the extracted guide information, and a guide screen display controlling step of displays the guide screen on the display unit by transmitting the guide screen that is generated at the guide screen generating unit to the terminal apparatus.

### EFFECT OF THE INVENTION

According to the present invention, because the invention stores map data of a map that at least includes name information representing names of specific places in the storage unit, stores guide information of the specific places in the storage unit, acquires a photographed image by controlling the photographing unit, identifies a display content from the photographed image that is acquired and specifies at least a part of the map data corresponding to the photographed image from the storage unit based on the identified display content, generates an operation screen, used for selecting the specific place, having display areas of the name information that is included in the map data set as selectable areas using the map data that is specified, displays at least a part of the operation screen that is generated on the display unit, sets the name information that corresponds to the selectable area that is selected using the display unit through the input unit out of the selectable areas displayed on the operation screen, extracts the guide information that coincides with the name information from the storage unit based on the name information that is set and generates a guide screen that includes at least a part of the extracted guide information, and displays at least a part of the guide screen that is generated on the display unit, the operation screen on which an arbitrary place that is present within the photographed image can be selected by a user can be provided as an input unit that inputs a data search condition, and accordingly, there is an advantage that a data search for a selected place on the operation screen can be easily performed with accuracy. Therefore, according to the present invention, for example, even when there are places having the same name, for example, places that are display targets are read from an image such as a map that is described in a simplified manner and can be displayed so as to be selectable, whereby a user can narrow down the search into one place on the operation screen based on the read image, and accordingly, there is an advantage that a data search for a place that is necessary for a user can be easily performed with accuracy.

According to the present invention, because the name information is information that represents at least one of a station name, a facility name, a prefecture name, a city name, a ward name, town name, village name, and a street name, by identifying at least one of a station name, a facility name, a prefecture name, a city name, a ward name, town name, village name, and a street name from the display content of the photographed image, there is an advantage that map data corresponding to the photographed image can be specified more accurately.

According to the present invention, because the invention specifies at least a part of the map data that corresponds to the photographed image from the storage unit by specifying a place that corresponds to a photographed area of the photographed image by referring to the map data stored in the storage unit based on at least one of a character string, an arrangement of the character string, and a symbol that are included in the display content, there is an advantage that map data corresponding to the photographed image can be specified more accurately based on at least one of a character string, the arrangement of the character string, and a symbol that are included in the display content.

According to the present invention, because the invention stores character string arrangement information relating to a character string of the map and an arrangement of the character string in the storage unit, and extracts the character string arrangement information that corresponds to at least one of the character string and the arrangement of the character string that are included in the display content from the storage unit and specifies at least a part of the map data that corresponds to the photographed image from the storage unit based on the extracted character string arrangement information, there is an advantage that, after character string arrangement information that corresponds to at least one of the character string and the arrangement of the character string that are included in the display content is specified, map data corresponding to the photographed image can be specified more accurately based on the specified character string arrangement information.

According to the present invention, because the invention stores symbol information that relates to a symbol that is used in the map in the storage unit, and extracts the symbol information that corresponds to the symbol included in the display content from the storage unit and specifies at least a part of the map data that corresponds to the photographed image from the storage unit based on the extracted symbol information, there is an advantage, after symbol information that corresponds to the symbol included in the display content is specified, map data that corresponds to the photographed image can be specified more accurately based on the specified symbol information.

According to the present invention, because the invention generates the operation screen having display areas of the name information included in the map data set as selectable areas on the photographed image by using the photographed image acquired and the map data specified, there is an advantage that not only the map data corresponding to the photographed image but also the photographed image that is acquired through photographing can be used for the operation screen.

According to the present invention, because the guide information further includes time table data of means of transportation, and the invention extracts the time table data that corresponds to the station name from the storage unit and generates the guide screen that includes the extracted time table data when the name information represents the station name, there is an advantage that the guide screen on which time table data for a station located at a specific place selected by a user is displayed can be presented to the user.

According to the present invention, because the guide information further includes poi information of a facility, and the invention extracts the poi information that corresponds to the facility name from the storage unit and generates the guide screen that includes the extracted poi information when the name information represents the facility name, there is an advantage that the guide screen on which POI information relating to a facility located at a specific place selected by a user is displayed can be presented to the user.

According to the present invention, because the invention stores traffic network data, sets the name information that corresponds to the selectable area selected using the display unit through the input unit as a point of departure or a destination, searches for a guide route that includes the point of departure or the destination using the traffic network data stored in the storage unit and generates guide route data, and generates the guide screen that includes the guide route data, there is an advantage that the guide screen on which a guide route including a specific place as a point of departure or a destination is displayed can be presented.

According to the present invention, because the invention acquires current position information of a user using the navigation apparatus, sets the current position information that is acquired as the point of departure and sets the name information that corresponds to the selectable area selected using the display unit through the input unit as the destination, and searches for the guide route that is from the point of departure to the destination using the traffic network data that is stored in the storage unit and generates the guide route data, there is an advantage that the guide screen on which a guide route from the current position to a specific place is displayed can be presented by only selecting a specific place that is a destination on the operation screen by a user.

According to the present invention, because the input unit is a touch panel, there is an advantage that selection of a specific place on the operation screen and the like can be performed by a user's intuitive operation.

According to the present invention, because the photographed image includes a still image and a moving image, there is an advantage that an operation screen and a guide screen that correspond to the photographed image can be generated more accurately, for example, based on a plurality of photographed images photographed by the user.

### BRIEF DESCRIPTION OF DRAWINGS

FIG. 1 is a block diagram of an example of a configuration of a navigation system according to first embodiment.
FIG. 2 is a flowchart for illustrating an example of the process of the navigation system according to the first embodiment.
FIG. 3 is an example of a photographed image according to the embodiment.
FIG. 4 is an example of an operation screen according to the embodiment.
FIG. 5 is an example of a guide screen according to the embodiment.
FIG. 6 is a block diagram of an example of a configuration of a navigation server according to an example not covered by the invention.
FIG. 7 is a flowchart for illustrating an example of the process of the navigation server according to an example not covered by the invention.
FIG. 8 is a block diagram of an example of a configuration of a navigation apparatus according to another example not covered by the invention.
FIG. 9 is a flowchart for illustrating an example of the process of the navigation apparatus according to an example not covered by the invention.

### BEST MODE(S) FOR CARRYING OUT THE INVENTION

The following describes an embodiment of a navigation system, a terminal apparatus, a navigation server, a navigation apparatus, a navigation method, and a program according to the present invention in detail with reference to the drawings below. The present invention is not limited to the embodiments.

Hereinafter, configurations and processes according to the present invention will be explained in detail in order of a first embodiment (navigation system), a second example not covered by the invention (navigation server (server-leading type)), and a third example not covered by the invention (navigation apparatus (standalone type)).

### First Embodiment

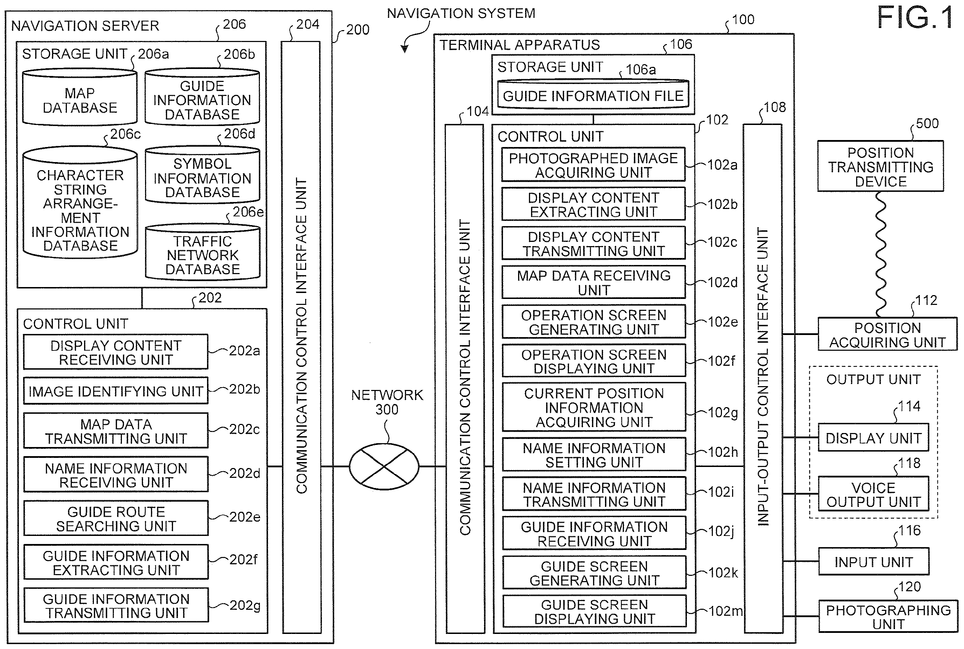

Firstly, the first embodiment (navigation system) of the present invention will be explained with reference to FIGS. 1 to 5.

Here, an example of structure of the navigation system is explained below with reference to FIG. 1. FIG. 1 is a block diagram for illustrating an example of the configuration of the navigation system according to the first embodiment and conceptually illustrates only a part of the configuration that relates to the present invention.

As illustrated in FIG. 1, a navigation server 200 conceptually at least includes a control unit 202 and a storage unit 206, and a terminal apparatus 100 at least includes a position acquiring unit 112, an output unit (a display unit 114 and a voice output unit 118), an input unit 116, an photographing unit 120, a control unit 102, and a storage unit 106 in the navigation system according to the first embodiment.

### Configuration of Navigation Server 200

In FIG. 1, the navigation server 200 has functions of receiving a display content (for example, character strings, arrangements of the character strings, symbols, and the like) of a photographed image that is transmitted from the terminal apparatus 100, specifying at least a part of the map data that corresponds to the photographed image from the storage unit 206 based on the display content that is received, transmitting the map data that is specified to the terminal apparatus 100, receiving the name information that is transmitted from the terminal apparatus 100, extracting the guide information that coincides with the name information from the storage unit 206 based on the name information that is received, and transmitting the guide information that is extracted to the terminal apparatus 100. The navigation server 200 is connected to the terminal apparatus 100 through a network 300 via a communication control interface unit 204, and includes the control unit 202 and the storage unit 206. The control unit 202 is a control unit that controls various processing. The communication control interface unit 204 is an interface connected to a communication device (not shown) such as a router connected to a communication line, a phone line and the like, and has a function of performing communication control between the navigation server 200 and the network 300. That is to say, the communication control interface unit 204 may have a function to communicate data to the terminal apparatus 100, or the like via the communication line. The storage unit 206 is a storage unit that is a fixed disk device such as Hard Disk Drive (HDD), Solid State Drive (SSD) and the like, and stores various databases and tables (for example, a map database 206a, a guide information database 206b, a character string arrangement information database 206c, a symbol information database 206d, a traffic network database 206e, and the like).

Among the constituent elements of the storage unit 206, the map database 206a is a map data storage unit that stores map data of a map that includes at least name information representing names of specific places. Here, the name information that is included in the map data stored in the map database 206a may be information that represents at least one of a station name, a facility name, a prefecture name, a city name, a ward name, town name, village name, and a street name.

Here, the map data stored in the map database 206a, in the present invention, may be outdoor map data, for example, map data (for example, the first to third localized mesh data of JIS standards, and 100 m mesh data) that is meshed on a scale. In addition, the map database 206a may store outdoor map data such as road maps or route maps of the whole country and each local area. Furthermore, the map database 206a may further store indoor map data, for example, a floor guide map relating to buildings (for example, a multi-story parking lot, a station, a department store, and a school) that has height information.

In addition, the map data stored in the map database 206a may include data such as shape data relating to the shapes of planimetric features (for example, structures such as a building, a house, and a station; a road; a track; a bridge; a tunnel; a contour line; shore lines such as a coast line, and a shoreline; specific areas such as the sea, a river, a lake, a pond, a marsh, a park, and an outdoor facility; an administrative boundary; an administrative district; and a block) displayed on the map, annotation data of annotations (for example, a place name; an address; a phone number; facility names of a store, a park, a station, and the like; names, which include commonly-called names, of a popular place, a historic site, a river, a lake, a bay, a mountain, a forest, and the like; names of a road, a bridge, a tunnel, and the like; a route name; a place information; and word-of-mouth information) displayed on the map, and symbol data of symbols (for example, map symbols of a mountain, a historic site, a temple, a school, a hospital, a factory, a cemetery, and the like; store symbols of a gas station, a convenience store, a supermarket, a restaurant, a bank, a post office, and the like; symbols of a traffic light on a road, an entrance and an exit of a toll road, a tollgate, a service area, a parking area, an interchange, and the like; facility symbols of a parking lot, a station, a hotel, an art gallery, a museum, and the like; and a symbol of a word-of-mouth spot) displayed on the map.

In addition, the indoor map data stored in the map database 206a may include internal path data relating to indoor paths of the inside of facilities or the like. Here, the internal path data may be data that is based on at least moving path data of the inside of a station or the like and map data of a map (facility guide map) that includes the moving path. For example, the internal path data may be image data acquired by representing a moving path on the facility guide map. In addition, for example, the internal path data may further include message data that explains the moving path. Here, the moving path that is based on the moving path data may be an optimal path (for example, a shortest path or a barrier-free path) that combines ticket gates or the like when transfer between a plurality of means of transportation is performed inside a facility.

Furthermore, the outdoor map data and the indoor map data may be image data used for map drawing in a raster form, a vector form, or the like. The outdoor map data and the indoor map data are stored in the map database 206a in advance, and it may be configured such that the control unit 202 of the navigation server 200 downloads latest data from an external apparatus (for example, a map providing server that provides map data) or the like through the network 300 on a regular basis and updates the outdoor map data and the indoor map data stored in the map database 206a.

Moreover, the guide information database 206b is a guide information storage unit that stores guide information of specific places. Here, the guide information may further include time table data of means of transportation. In addition, the guide information may further include POI information of facilities.

Here, the time table data of means of transportation that is stored in the guide information database 206b is information that represents time tables of means of transportation including a railroad, an airplane, a bus, a ship, and the like. In addition, the time table data may be information that includes destination information of the means of transportation (for example, final destination information) and operation types (for example, a limited express, an express, a semi-express, a rapid-service, a rapid-service express, a commuter limited express, a commuter rapid-service, a commuter express, a section express, a section semi-express, a section rapid-service, a local, and an ordinary).

In addition, the POI information stored in the guide information database 206b is information that includes a plurality of items that represent attributes of a POI. Here, for example, the attributes may be a name, a type (category), an address, a phone number, a URL, opening hours, handling commodities, an average price (for example, an average usage fee), a reputation, ranking, a sudden rise, the degree of easiness in visiting, a recommendation score, photo data, coupon information, word-of-mouth (for example, a word-of-mouth evaluation and a user comment), use conditions, usability, and a facility scale of the POI, the longitude, latitude, and altitude of the POI, the location (an urban area, a suburban area, a harbor part, the periphery of a station, and the like) of a place at which the POI is present, use limitations, a POI ID, a reference rate such as the number of accesses to the POI information or an access frequency, update date and time of the POI information, and the like. Here, the recommendation score may be a value that is acquired by calculating the degree of recommendation in an automatic manner based on user information, history information, and the like.

Here, the POI is an abbreviation of "point of interest" and, for example, is a specific place or a specific facility that is recognized by people as a convenient place, or a place of interest and POIs may be, stores, companies, offices, public facilities, entertaining facilities, outdoor facilities, and the like. Here, the stores, for example, may be restaurants, grocery stores, liquor shops, cigarette stores, department stores, shopping centers, supermarkets, convenience stores, gas stations, financial institutions, post offices, multi-story parking lots, and lodging facilities such as hotels and inns. In addition, the public facilities, for example, may be government offices, police stations, police boxes, fire stations, stations, medical institutions, art galleries, museums, and schools. Furthermore, the entertaining facilities, for example, may be movie theaters, theaters, amusement parks, Pachinko parlors, casinos, and race tracks. In addition, the outdoor facilities may be bus terminals, parks, amusement parks, camping places, passageways, outdoor parking lots, zoos, and the like. Furthermore, the guide information database 206b may store icons that correspond to the POIs. The POI information is stored in the guide information database 206b in advance, and the control unit 202 of the navigation server 200 may download latest data from an external apparatus (for example, a facility information providing server that provides POI information) or the like through the network 300 on a regular basis and update the POI information that is stored in the guide information database 206b.

In addition, the character string arrangement information database 206c is a character string arrangement information storage unit that stores character string arrangement information relating to a character string of a map and the arrangement of the character string. Here, the character string arrangement information that is stored in the character string arrangement information database 206c may be a character string that can be used by the control unit 202 for specifying map data corresponding to a photographed image from the map database 206a and coordinate data that represents the arrangement of the character string. As an example, the character string arrangement information that is stored in the character string arrangement information database 206c may be a character string of each of the annotations (for example, a place name; an address; a phone number; facility names of a store, a park, a station, and the like; names, which include commonly-called names, of a popular place, a historic site, a river, a lake, a bay, a mountain, a forest, and the like; names of a road, a bridge, a tunnel, and the like; and a route name) displayed on the map and coordinate data that represents the arrangement of the character string.

Such character string arrangement information is extracted from a map (for example, a road map, a route map, or a floor guide map) and is stored in the character string arrangement information database 206c in advance, and the control unit 202 of the navigation server 200 may download latest data from an external apparatus (for example, an image database that provides image data of the map) or the like through the network 300 on a regular basis and update the character string arrangement information that is stored in the character string arrangement information database 206c. In addition, the character string arrangement information database 206c may store image data of a map corresponding to the extracted character string arrangement information in association with the character string arrangement information.

In addition, the symbol information database 206d is a symbol information storage unit that stores symbol information relating to symbols that are used in the map. Here, the symbol information that is stored in the symbol information database 206d may be symbol data that represents symbols that can be used by the control unit 202 for specifying map data corresponding to the photographed image from the map database 206a. As an example, the symbol information that is stored in the symbol information database 206d may be symbol data of the symbols (for example, map symbols of a mountain, a historic site, a temple, a school, a hospital, a factory, a cemetery, and the like; store symbols of a gas station, a convenience store, a supermarket, a restaurant, a bank, a post office, and the like; symbols of a traffic light on a road, an entrance and an exit of a toll road, a tollgate, a service area, a parking area, an interchange, and the like; facility symbols of a parking lot, a station, a hotel, an art gallery, a museum, and the like; and a symbol of a word-of-mouth spot) displayed on the map.

Such symbol information is extracted from a map (for example, a road map, a route map, or a floor guide map) and is stored in the symbol information database 206d in advance, and the control unit 202 of the navigation server 200 may download latest data from an external apparatus (for example, an image database that provides image data of the map) or the like through the network 300 on a regular basis and update the symbol information that is stored in the symbol information database 206d. In addition, the symbol information database 206d may store image data of a map corresponding to the extracted symbol information in association with the symbol information.

In addition, the traffic network database 206e is a traffic network data storage unit that stores traffic network data. Here, the traffic network data that is stored in the traffic network database 206e may include route network data, road network data, and in-facility network data. Such data is stored in the traffic network database 206e in advance, and the control unit 202 of the navigation server 200 may download latest data from an external apparatus or the like through the network 300 on a regular basis and update the traffic network data that is stored in the traffic network database 206e.

Here, the route network data that is stored in the traffic network database 206e is network data that defines route networks of means of transportation (for example, means of public transportation) such as railroads (for example, trains, electric trains, and subways), airplanes, buses (for example, road surface buses, and express buses), and ships (for example, ferries) and is network data that is represented by a combination of node data of nodes (for example, a station, a stop, a depot, a stand, an airport, a port, and a terminal that are stop places of the means of transportation) that are nodal points in the representation of a route network and link data of links of a rail route, an airway route, an water route, a bus route, and the like that connect nodes. Here, the railroad is means of transportation that transports passengers, goods, and the like by traveling with being guided by a fixed-type guiding path (a rail, a guide rail, or the like) or the like that is disposed on a route and, for example, may be an electric train, a municipal streetcar, a ropeway, a monorail, a cable car, or a linear motor car. In addition, the node data may include information such as of a node number (for example, a node ID), the name of the node (for example, the name of a stop, the name of a depot, the name of a stand, the name of an airport, the name of a port, and the name of a terminal that are names of stop places of the means of transportation) and specific positional coordinates of the longitude, latitude, and altitude. In addition, the link data may include information of a link number (for example, an link ID), a start node ID, an end node ID, a type, a link length (for example, a distance), the attributes in the link such as a highway, a tunnel, and a bridge, and a name (for example, a route name).

In addition, the route network data may include time table data of the means of transportation. The time table data may be information that further includes departure time and arrival time (for example, scheduled departure time, going-through time, and arrival time) of means of transportation at each one of nodes (in other words, the stop places of the means of transportation) on a route and the name of the route of the means of transportation, attribute information such as the names of nodes (in other words, the stop places of the means of transportation) on a route of the means of transportation. In addition, the time table data may include attribute information (for example, information of type and destinations) of the means of transportation that is associated with each interval (for example, one or a plurality of links) that combines nodes on the route of the means of transportation.

Furthermore, the route network data may include fare data of the means of transportation. Here, the fare data, for example, may be information that represents fares that occur when each one of means of transportation such as a railroad, an airplane, a bus, or a ship is used. In addition, the route network data may include boarding position data. Here, the boarding position data, for example, may be information that represents a boarding position (for example, a car that is close to the ticket gate, a car located at a position that is convenient for a transfer, a car that has a low congestion rate, and a car dedicated to women) of means of transportation in which a plurality of cars are connected such as an electric train, a municipal streetcar, a monorail, a cable car, or a linear motor car. In addition, the route network data may include operating information of each one of means of transportation such as railroad operating information, airplane operating information, ship operating information, bus operating information, and the like. Such operating information of each one of the means of transportation is stored in the traffic network database 206e in advance, and the control unit 202 of the navigation server 200 may download latest data from an external system or the like through the network 300 on a regular basis and update the operating information of each one of the means of transportation that is stored in the traffic network database 206e.

In addition, the road network data that is stored in the traffic network database 206e is network data that defines a road network and, for example, is network data that is represented by a combination of node data of nodes that are nodal points in the representation of a road network such as an intersection and link data of a link that is a road section located between nodes. Here, the node data may include information of a node number (for example, a node ID), the name of a node, positional coordinates such as the longitude, latitude, and altitude, a node type, the number of connected links, connected node numbers, the name of an intersection, and the like. In addition, the link data may include information of a link number (for example, a link IDs), a start node ID, an end node ID, the type of a road, a route number of a national road, a prefectural road, or a municipal road, important route information, attribute information of an administrative district in which a link is located, a link length (for example, a distance), a road service status, a traffic regulation section under abnormal weather, vehicle weight restriction, vehicle height restriction, a road width, a road width division, lane information (for example, vehicle traffic zone information relating to the number of lanes, a dedicated traffic zone, a traffic zone giving priority to route buses or the like, vehicle traffic division, and traffic division for each traveling direction), the speed limit, attributes in the link such as a highway, a tunnel, a bridge, or the like, the names, and the like. Furthermore, the road network data may include fare data and the like. Here, the fare data may be information that represents the cost of fuel consumed when traveling is performed using a vehicle, an auto-bicycle, or the like, the toll of a toll road such as a national expressway, a vehicle-dedicated road, or the like. In addition, the road network data may store positional information such as the longitude and latitude information of a facility that is present on a route when traveling is performed using a vehicle, an auto-bicycle, a bicycle, on foot, or the like.

In addition, the road network data may include road traffic information. Here, the road traffic information may include traffic jam information such as a traffic jam occurring place, a traffic jam distance, a transit time (in other words, a traveling time or the like) between two places on a road, and the like. In addition, the road traffic information may include traffic obstacle information, traffic regulation information, and the like. Here, the traffic regulation information is data that defines a variety of traffic regulation, and, for example, may include information of traffic regulation under abnormal weather such as precipitation regulation, snow accumulation/freeze regulation, ultra wave regulation, wind-speed regulation, and visibility regulation, vehicular traffic regulation such as height regulation or weight regulation, regulation due to construction that is accompanied with road construction and operation, or construction around a road, regulation on a traffic zone that is allowed for traffic in accordance with a time zone or a vehicle type, vehicle traffic prohibition due to destruction of a road or the like, entry prohibition of general vehicles due to a community zone that is installed so as to acquire the security of traffic, entry prohibition of general vehicles due to a road being connected to a private land, and the like. The road traffic information is stored in the traffic network database 206e in advance, and the control unit 202 of the navigation server 200 may download latest data from an external system (for example, Vehicle Information and Communication System (VICS) (registered trademark), Advanced Traffic Information Service (ATIS), or Japanese Road Traffic Information Center (JARTIC)) through the network 300 on a regular basis (for example, every five minutes) and update the road traffic information that is stored in the traffic network database 206e.

In addition, the in-facility network data that is stored in the traffic network database 206e is network data that defines a route network inside the facility. Here, the in-facility network data that is stored in the traffic network database 206e, for example, is network data that is represented by a combination of node data of nodes that are nodal points connecting passages such as doorways of a store, a company, an office, and a restroom disposed inside a structure, gates of an elevator and an escalator, a doorway of stairs, a boarding gate of an airplane, or a boarding position of an electric train on a platform of a station, a ticket gate of a station, and link data of links that are a passage connected between nodes, stairs, a moving walkway, an escalator, and an elevator.

Here, the node data may include information of node numbers (for example, node IDs), the names of nodes (names of doorways and names of gates, and the like), position coordinates such as the longitude, latitude, and altitude or the like, a node type (for example, a doorway, a gate, the corner of a passage, or a branching point of a passage), the number of connected links, a connection node number, and the like. In addition, the link data may include information of a link number (for example, a link ID), a start node ID, an end node ID, a link length, a width, a link type (for example, a passage that connects nodes, stairs, a slope, an escalator, an elevator, or a moving walkway), and barrier free design. Here, a facility may be an indoor structure such as a station, an office building, a hotel, a department store, a supermarket, a museum, an art gallery, a school, an aquarium, an underground passage, a multi-story parking lot, an underground parking lot, or an underground shopping center. In addition, the facility may be an outdoor structure such as a bus terminal, a park, an amusement park, a camping place, a passageway, an outdoor parking lot, or a zoo.

In addition, although not illustrated in the figure, the storage unit 206 may store color scheme information, which includes a combination of colors of the map or the arrangement positions of colors, relating to a color scheme. Here, the color scheme information that is stored in the storage unit 206 may be color scheme data that represents a color scheme that can be used by the control unit 202 for specifying map data that corresponds to the photographed image from the map database 206a. For example, when the map is a route map, the color scheme information that is stored in the storage unit 206 may be color scheme data that represents a color scheme in which a red color represents the current station on the route map, and unique colors respectively represent routes on the route map. For example, color scheme data that represents a color scheme of unique colors representing routes may be color scheme data that represents a color scheme in which "yellow green" represents the route of line Y, "brown" represents the route of line F, and "red" represents the route of line M. In addition, the color scheme information that is stored in the storage unit 206 may be data of a combination of colors or a combination of colors and the arrangement pattern of the colors. Accordingly, in this embodiment, the control unit 202 can identify a route or the like based on a difference in the arrangement of colors by referring to the color scheme information stored in the storage unit 206, for example, even for a combination of the same colors.

Such color scheme information is extracted from a map (for example, a road map, a route map, or a floor guide map) and is stored in the storage unit 206 in advance, and the control unit 202 of the navigation server 200 may download latest data from an external apparatus (for example, an image database that provides image data of the map) or the like through the network 300 on a regular basis and update the color scheme information that is stored in the storage unit 206. In addition, the storage unit 206 may store image data of a map corresponding to the extracted color scheme information in association with the color scheme information.

In addition, the storage unit 206 may further store traffic information of means of transportation. Here, the traffic information that is stored in the storage unit 206 may include delay information relating to a route in which a delay occurs, operation suspension information relating to a route in which the operation is suspended, and the like. Such traffic information is stored in the storage unit 206 in advance, and the control unit 202 of the navigation server 200 may download latest data from an external system (for example, an external traffic information providing server) or the like through the network 300 on a regular basis (for example, for every five minutes) and update the traffic information that is stored in the storage unit 206. In addition, in this embodiment, the traffic information that is stored in the storage unit 206 may be used when an operation screen or a guide screen is generated by the control unit 202. For example, the control unit 202 may use the delay information relating to a route in which a delay occurs when an operation screen or a guide screen that is superimposed on the map data or the photographed image that corresponds to the route map is generated.

The control unit 202 includes an internal memory that stores a control program such as an operating system (OS), a program specifying various processing procedures, and necessary data. The control unit 202 performs information processing for executing various pieces of processing by using these programs. The control unit 202 functionally and conceptually includes a display content receiving unit 202a, an image identifying unit 202b, a map data transmitting unit 202c, a name information receiving unit 202d, a guide route searching unit 202e, a guide information extracting unit 202f, and a guide information transmitting unit 202g.

Here, the display content receiving unit 202a is a display content receiving unit that receives a display content of a photographed image that is transmitted from the terminal apparatus 100.

Here, in this embodiment, the display content includes characters (for example, a station name, a facility name, a prefecture name, a city name, a ward name, town name, village name, and a street name) that are displayed on a map (for example, a road map, a route map, or a floor guide map), the arrangements of character strings, a color scheme (for example, a color scheme of unique colors that represents the routes), symbols (for example, map symbols, store symbols, and facility symbols), and the like.

Here, the image identifying unit 202b is an image identifying unit that identifies a display content from the photographed image that is received by the display content receiving unit 202a and specifies at least a part of the map data corresponding to the photographed image from the map database 206a based on the identified display content. Here, the image identifying unit 202b may specify a place that corresponds to the photographed area of the photographed image by referring to map data (for example, map data such as a route map) that is stored in the map database 206a based on at least one of character strings, the arrangements of the character strings, and symbols that are included in the display content, thereby specifying at least a part of the map data that corresponds to the photographed image from the map database 206a. In addition, when the character string arrangement information database 206c is included, the image identifying unit 202b may extract character string arrangement information that corresponds to at least one of the character strings and the arrangements of the character strings from the character string arrangement information database 206c and specify at least a part of map data that corresponds to the photographed image from the map database 206a based on the extracted character string arrangement information. Furthermore, when the symbol information database 206d is included, the image identifying unit 202b may extract symbol information that corresponds to the symbols included in the display content from the symbol information database 206d and specify at least a part of map data that corresponds to the photographed image from the map database 206a based on the extracted symbol information.

Here, the map data transmitting unit 202c is a map data transmitting unit that transmits the map data that is specified by the image identifying unit 202b to the terminal apparatus 100.

Here, the name information receiving unit 202d is a name information receiving unit that receives the name information that is transmitted from the terminal apparatus 100.

Here, the guide route searching unit 202e is a guide route searching unit that generates guide route data by searching for a guide route that includes the name information received by the name information receiving unit 202d as the point of departure or the destination using the traffic network data that is stored in the traffic network database 206e. Here, the guide route searching unit 202e may generate guide route data by searching for a guide route that is formed from a point of departure to a destination received by the name information receiving unit 202d using the traffic network data that is stored in the traffic network database 206e. In addition, the guide route searching unit 202e may search for a guide route that passes through a transit point.

Here, the guide information extracting unit 202f is a guide information extracting unit that extracts the guide information that coincides with the name information from the guide information database 206b based on the name information that is received by the name information receiving unit 202d. Here, when the name information received by the name information receiving unit 202d represents a station name, the guide information extracting unit 202f may extract time table data that corresponds to the station name from the guide information database 206b. On the other hand, when the name information received by the name information receiving unit 202d represents a facility name, the guide information extracting unit 202f may extract POI information that corresponds to the facility name from the guide information database 206b. In addition, the guide information extracting unit 202f may further include the guide route data generated by the guide route searching unit 202e in the guide information.

Here, the guide information transmitting unit 202g is a guide information transmitting unit that transmits the guide information that is extracted by the guide information extracting unit 202f to the terminal apparatus 100.

### Configuration of Terminal Apparatus 100

In FIG. 1, the terminal apparatus 100 has functions of acquiring a photographed image by controlling the photographing unit 120, extracting the display content from the photographed image that is acquired, and transmitting the display content that is extracted to the navigation server 200. In addition, the terminal apparatus 100 has functions of receiving the map data transmitted from the navigation server 200, generating an operation screen, used for selecting the specific place, having display areas of name information that is included in the map data set as selectable areas using the map data that is received, displaying at least a part of the operation screen that is generated on the display unit 114, setting the name information that corresponds to the selectable area that is selected using the display unit 114 through the input unit 116 out of the selectable areas displayed on the operation screen, transmitting the name information that is set to the navigation server 200. Here, the terminal apparatus 100 has functions of receiving the guide information that is transmitted from the navigation server 200, generating a guide screen that includes at least a part of the guide information that is received, and displaying at least a part of the guide screen that is generated on the display unit 114.

The terminal apparatus 100, for example, is an information processing apparatus such as a desktop-type or notebook-type personal computer that is generally available in the market, a mobile terminal apparatus such as a mobile phone, a PHS, or a PDA, and a navigation terminal that performs route guidance. Here, the terminal apparatus 100 may have an Internet browser or the like built therein and may have a route guidance application, a transfer guidance application, or the like built therein. In addition, in order to acquire the current position in real time, the terminal apparatus 100 includes the position acquiring unit 112 that has a GPS function, an IMES function, and the like. Furthermore, the terminal apparatus 100 includes an output unit that at least includes a display unit 114 and a voice output unit 118. In addition, the terminal apparatus 100 includes a photographing unit 120 such as a camera that can capture a still image and a moving image.

Here, the display unit 114 is display units (for example, a display or a monitor that is configured by a liquid crystal, an organic EL, or the like) that displays a display screen such as guide information. In addition, the voice output unit 118 is a voice output unit (for example, a speaker) that outputs voice data received from the navigation server 200 or the like as a voice. Furthermore, the terminal apparatus 100 includes an input unit 116 (for example, a key input unit, a touch panel, a keyboard, or a microphone) that operates the photographing unit 120, inputs a route searching condition, and the like. In addition, an input-output control interface unit 108 controls the position acquiring unit 112, the display unit 114, the input unit 116, the voice output unit 118, the photographing unit 120, and the like.

Here, the position acquiring unit 112, for example, may be position acquiring units for receiving a position information signal that is transmitted from a position transmitting device 500. Here, the position transmitting device 500 may be a GPS device that transmits a position information signal (GPS signal). In addition, the position transmitting device 500 may be an indoor message system (IMES) device that realizes the IMES technology that enables indoor positioning using a position information signal that has characteristics similar to those of the GPS signal. Furthermore, the IMES technology is a system that is proposed from a quasi-zenith satellite frame that is a positioning satellite system.

In addition, the position transmitting device 500 may be a GPS repeater that transmits a GPS signal, which has been received at an outdoor position, at an indoor position. In addition, the position transmitting device 500 may be a small-size transmission device that is arbitrarily disposed at each floor inside a building (for example, a multi-story parking lot) or each position in an underground structure (for example, a subway station, an underground shopping center, an underground passage way, and an underground parking lot). Furthermore, self-position information (a position ID or the like) that corresponds to the installation place is assigned to this small-size transmission device. Then, when the terminal apparatus 100 enters a communication range of the small-size transmission device, the terminal apparatus 100 receives the self-position information that is transmitted from the small-size transmission device as a position information signal. A communication system at this time may be, for example, any local-area radio system such as a radio frequency identification (RFID) tag system and Bluetooth (registered trademark), and an infrared ray communication system. In addition, the position transmitting device 500 may be an access point of a wireless LAN. In this embodiment, the position acquiring unit 112 may acquire identification information of an access point by receiving a wireless LAN signal or the like. Then, the control unit 102 may acquire position information by specifying the position of the access point based on the identification information, which is unique to the access point, acquired by the position acquiring unit 112. In addition, in this embodiment, the control unit 102 may calculate position information that includes the longitude, latitude, and height information based on the position information signal that is acquired by the position acquiring unit 112.

In addition, the position acquiring unit 112 may acquire position information that represents the current position of a user using the terminal apparatus 100, for example, based on azimuth information such as a traveling direction of the terminal apparatus 100 that is detected by an azimuth sensor, distance information that is detected by a distance sensor, and the map data. Here, as the azimuth sensor, a geomagnetic sensor that detects the absolute direction of travel of the terminal apparatus 100 and an optical gyro that detects a relative direction of travel of the terminal apparatus 100 may be used. In addition, the azimuth sensor may be an electronic compass that can acquire information relating to the azimuth and the inclination by combining the geomagnetic sensor and an acceleration sensor.

In addition, a communication control interface unit 104 is an interface that is connected to a communication device (not illustrated in the figure) such as an antenna, a router, or the like that is connected to a communication line or a telephone line, or the like and has a function of controlling communication between the terminal apparatus 100 and the network 300. In other words, the communication control interface unit 104 has a function of performing data communication with the navigation server 200 and the like through the communication line. In addition, the network 300 has a function of mutually connecting the terminal apparatus 100 and the navigation server 200 and an external apparatus or an external system and, for example, may be the Internet, a telephone line network (a mobile terminal circuit network, a general telephone circuit network, or the like), an intranet, or a power line communication (PLC).

In addition, the storage unit 106 is storage units that is any one of high-capacity storage units such as an HD or an SSD and a small-capacity high-speed memory (for example, a cache memory) that is configured by using a static random access memory (SRAM) or the like or both and may store various databases, files, and tables (a guide information file 106a and the like). Here, the storage unit 106 may temporarily store various files and the like.

The guide information file 106a is a guide information storage unit that stores guide information.

Here, the control unit 102 includes an internal memory that stores a control program such as OS, a program specifying various processing procedures, and necessary data. The control unit 102 performs information processing for executing various pieces of processing by using these programs. The control unit 102 functionally and conceptually includes a photographed image acquiring unit 102a, a display content extracting unit 102b, a display content transmitting unit 102c, a map data receiving unit 102d, an operation screen generating unit 102e, an operation screen displaying unit 102f, a current position information acquiring unit 102g, a name information setting unit 102h, a name information transmitting unit 102i, a guide information receiving unit 102j, a guide screen generating unit 102k, and a guide screen displaying unit 102m.

Here, the photographed image acquiring unit 102a is a photographed image acquiring unit that acquires a photographed image by controlling the photographing unit 120. Here, the photographed image includes a still image and a moving image.

Here, the display content extracting unit 102b is a display content extracting unit that extracts the display content from the photographed image that is acquired by the photographed image acquiring unit 102a.

Here, the display content transmitting unit 102c is a display content transmitting unit that transmits the display content that is extracted by the display content extracting unit 102b to the navigation server 200.

Here, the map data receiving unit 102d is a map data receiving unit that receives the map data transmitted from the navigation server 200.

Here, the operation screen generating unit 102e is an operation screen generating unit that generates an operation screen, used for selecting the specific place, having display areas of the name information that is included in the map data set as selectable areas using the map data that is received by the map data receiving unit 102d. Here, the operation screen generating unit 102e generates the operation screen having display areas of the name information included in the map data set as selectable areas on the photographed image by using the photographed image acquired by the photographed image acquiring unit 102a and the map data received by the map data receiving unit 102d.

Here, the operation screen displaying unit 102f is an operation screen displaying unit that displays at least a part of the operation screen that is generated by the operation screen generating unit 102e on the display unit 114.

In addition, the current position information acquiring unit 102g is a current position information acquiring unit for acquiring the current position information of a user using the terminal apparatus 100. Here, the current position information acquiring unit 102g may acquire the current position information of a user using the terminal apparatus 100 for every predetermined time (predetermined period) (for example, every one second or every three minutes). In addition, the current position information acquiring unit 102g may acquire position information that is calculated based on the position information signal received by the position acquiring unit 112 from the position transmitting device 500 as the current position information of the user using the terminal apparatus 100. Furthermore, the current position information acquiring unit 102g may further acquire azimuth information such as the direction of travel of the terminal apparatus 100 that is detected by the azimuth sensor of the position acquiring unit 112 or the like as the current position information of the user using the terminal apparatus 100.

Here, the name information setting unit 102h is a name information setting unit that sets the name information that corresponds to the selectable area that is selected using the display unit 114 through the input unit 116 out of the selectable areas displayed by the operation screen displaying unit 102f on the operation screen. Here, the name information setting unit 102h may set the name information that corresponds to the selectable area selected using the display unit 114 through the input unit 116 as a point of departure or a destination. In addition, the name information setting unit 102h may set the current position information that is acquired by the current position information acquiring unit 102g as the point of departure and sets the name information that corresponds to the selectable area selected using the display unit 114 through the input unit 116 as the destination.

Here, the name information transmitting unit 102i is a name information transmitting unit that transmits the name information that is set by the name information setting unit 102h to the navigation server 200.

Here, the guide information receiving unit 102j is a guide information receiving unit that receives the guide information that is transmitted from the navigation server 200. Here, the guide information receiving unit 102j may store the received guide information in the guide information file 106a.

Here, the guide screen generating unit 102k is a guide screen generating unit that generates a guide screen that includes at least a part of the guide information that is received by the guide information receiving unit 102j. Here, when time table data is included in the guide information that is received by the guide information receiving unit 102j, the guide screen generating unit 102k may generate a guide screen that includes the time table data. In addition, when POI information is included in the guide information that is received by the guide information receiving unit 102j, the guide screen generating unit 102k may generate a guide screen that includes the POI information. Furthermore, when guide route data is included in the guide information that is received by the guide information receiving unit 102j, the guide screen generating unit 102k may generate a guide screen that includes the guide route data.

Here, the guide screen displaying unit 102m is a guide screen displaying unit that displays at least a part of the guide screen that is generated by the guide screen generating unit 102k on the display unit 114.

As above, an example of the configuration of the navigation system according to the first embodiment has been explained.

### Process of Navigation System

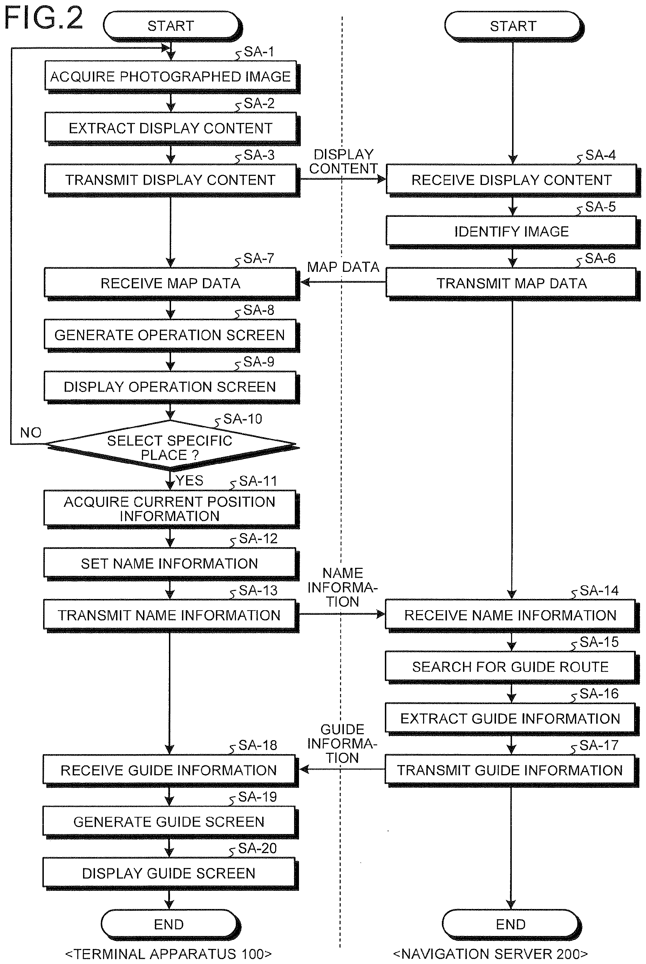

Next, an example of the process of the navigation system according to the first embodiment configured in this way will be explained below in detail with reference to FIGS. 2 to 5. FIG. 2 is a flowchart for illustrating an example of the process of the navigation system according to the first embodiment.

As illustrated in FIG. 2, first, the photographed image acquiring unit 102a of the terminal apparatus 100 acquires a photographed image by controlling the photographing unit 120 (Step SA-1). Here, the photographed image may include a still image and a moving image.

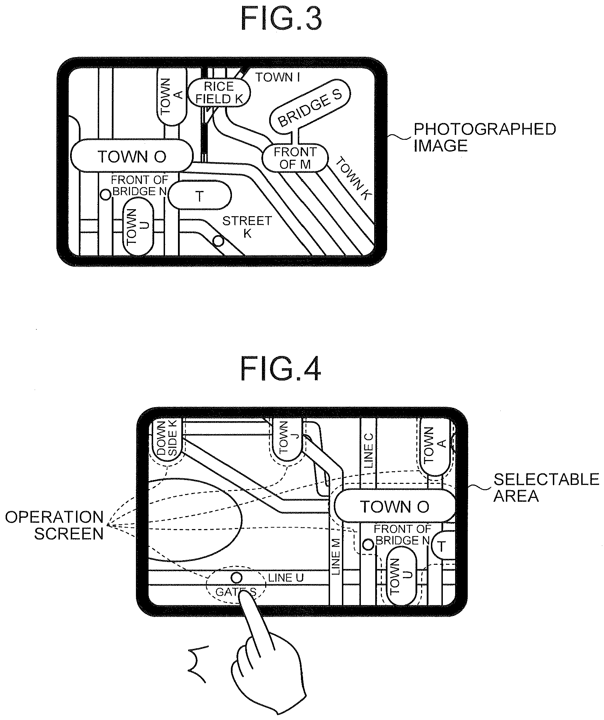

Here, an example of the photographed image in this embodiment will be explained with reference to FIG. 3. As an example, when a map that is a photographing target is a route map (for example, a route map of a subway), in order to request a route search from the route map that is photographed by a camera of the terminal apparatus 100, the photographed image acquiring unit 102a acquires a photographed image of the route map as illustrated in FIG. 3. In other words, the photographed image acquiring unit 102a starts photographing a route map that is used for a user to input a route search condition (for example, a destination) by using the terminal apparatus 100. In addition, in this embodiment, although a route map is represented as an example of a simplified map, the present invention is not limited thereto.

Referring back to FIG. 2, the display content extracting unit 102b of the terminal apparatus 100 extracts a display content from the photographed image, which is acquired by the process of the photographed image acquiring unit 102a at Step SA-1 (Step SA-2).

In this embodiment, as an example, when the photographed image acquired by the photographed image acquiring unit 102a is an image of a route map as illustrated in FIG. 3, the display content extracting unit 102b extracts display contents such as characters (for example, characters that represent town U, front of bridge N, town O, town A, rice field K, town I, bridge S, front of M, town K, and street K, T) displayed on the route map, the arrangements of character strings (character displaying positions), a color scheme (for example, a color scheme of unique colors that represent routes), and symbols (for example, symbols of white circles that represent places of stations) from the photographed image. In other words, the display content extracting unit 102b acquires character strings from the photographed image and determines positional relation among the character strings, symbols, colors, and the like, whereby extracting information of the pattern of a combination of display contents that include at least one of the character strings, the arrangements of the character strings, the symbols, and the color scheme.

Then, the display content transmitting unit 102c of the terminal apparatus 100 transmits the information of the display contents (for example, in FIG. 3, characters that represent town U, front of bridge N, town O, town A, rice field K, town I, bridge S, front of M, town K, street K, T, and the like, and symbols of white circles that represent display places of stations on the route map) extracted by the process of the display content extracting unit 102b at Step SA-2 to the navigation server 200 (Step SA-3). In other words, the display content transmitting unit 102c transmits the information of the pattern of a combination of display contents including at least one of the character strings, the arrangements of the character strings, the symbols, and the color scheme to the navigation server 200. As above, according to the first embodiment, the terminal apparatus 100 transmits only the information (for example, a pattern of a combination of display contents that include at least one of character strings, the arrangements of the character strings, the symbols, and the color scheme), which can be collated, extracted from the terminal apparatus 100 side without transmitting the photographed image to the navigation server 200.

Then, the display content receiving unit 202a of the navigation server 200 receives the information of the pattern of the combination of display contents including at least one of the character strings, the arrangements of the character strings, the symbols, and the color scheme of the photographed image which has been transmitted from the terminal apparatus 100 by the process of the display content transmitting unit 102c at Step SA-3 (Step SA-4).

Then, the image identifying unit 202b of the navigation server 200, based on the information of the pattern of the combination of display contents including at least one of character strings, the arrangement of the character strings, symbols, and the color scheme that has been received by the process of the display content receiving unit 202a at Step SA-4, specifies a place corresponding to the photographed area of the photographed image by referring to the map data that is stored in the map database 206a, thereby specifying at least a part of map data that corresponds to the photographed image from the map database 206a (Step SA-5). For example, the image identifying unit 202b may extract character string arrangement information corresponding to the information of the pattern of the combination of at least one of the character strings (for example, in FIG. 3, the character strings represented by town U, front of bridge N, town O, town A, rice field K, town I, bridge S, front of M, town K, street K, and T) and the arrangements of the character strings (for example, in FIG. 3, the arrangements of the character strings represented by town U, front of bridge N, town O, town A, rice field K, town I, bridge S, front of M, town K, street K, and T) included in the display contents from the character string arrangement information database 206c and specify at least a part of map data that corresponds to the photographed image from the map database 206a based on the extracted character string arrangement information. In addition, the image identifying unit 202b may extract symbol information corresponding to the information of a pattern of a combination of symbols (for example, in FIG. 3, the symbols of white circles that represent the places of stations and the like) included in the display contents from the symbol information database 206d and specify at least a part of map data that corresponds to the photographed image from the map database 206a based on the extracted symbol information.

In other words, the image identifying unit 202b performs collation of patterns including a collation of information that are stored in each database (for example, the map database 206a, the character string arrangement information database 206c, and the symbol information database 206d), a character string, and the like by using the information of the pattern of a combination of display contents including at least one of character strings, the arrangements of the character strings, symbols, and a color scheme. Then, when the collation of patterns including a collation of character strings and the like can be performed, the image identifying unit 202b acquires image information of at least a part of map data that corresponds to the photographed image.

Then, the map data transmitting unit 202c of the navigation server 200 transmits the map data that is specified by the process of the image identifying unit 202b at Step SA-5 to the terminal apparatus 100 (Step SA-6). Here, the map data transmitted from the navigation server 200 to the terminal apparatus 100 may include at least pattern information that is necessary for the generation of the operation screen. For example, the navigation server 200 may transmit at least one of shape data relating to the shapes of planimetric features displayed on the map, annotation data of annotations displayed on the map, and symbol data of symbols displayed on the map, which are included in the map data, to the terminal apparatus 100 as pattern information that is necessary for the generation of the operation screen.

Then, the map data receiving unit 102d of the terminal apparatus 100 receives the map data that is transmitted from the navigation server 200 by the process of the map data transmitting unit 202c at Step SA-6 (Step SA-7).

Then, the operation screen generating unit 102e of the terminal apparatus 100 generates an operation screen, on which display areas of name information included in the map data are set as selectable areas, used for selecting a specific place by using the map data received by the process of the map data receiving unit 102d at Step SA-7 (Step SA-8). Here, the operation screen generating unit 102e may generate the operation screen on which display areas of name information included in the map data are set as selectable areas on the photographed image by using the photographed image that is acquired by the process of the photographed image acquiring unit 102a at Step SA-1 and the map data that is received by the process of the map data receiving unit 102d at Step SA-7. In other words, the operation screen generating unit 102e generates the display content of the operation screen based on the map data and the photographed image.

Here, an example of the operation screen in this embodiment will be explained with reference to FIG. 4. As an example, when a map that is a photographing target is a route map (for example, a route map of a subway), the operation screen generating unit 102e, as illustrated in FIG. 4, generates an operation screen, on which display areas of name information (for example, in FIG. 4, name information that represents names of specific places such as gate S, downside K, town J, town O, town U, T, front of bridge N, and town A) included in the map data are set as selectable areas (for example, in FIG. 4, clickable areas that are surrounded by broken lines), used for selecting a specific place (for example, in FIG. 4, specific places such as gate S, downside K, town J, town O, town U, T, front of bridge N, and town A) by using the map data corresponding to the photographed image of the route map illustrated in FIG. 3. In FIG. 4, although the selectable areas are denoted by the broken lines for the explanation, the broken lines may not be displayed on an actual operation screen.

Here, referring back to FIG. 2, the operation screen displaying unit 102f of the terminal apparatus 100 displays at least a part of an operation screen (for example, the operation screen illustrated in FIG. 4) that is generated by the process of the operation screen generating unit 102e at Step SA-8 on the display unit 114 (Step SA-9).

Then, the control unit 102 of the terminal apparatus 100 determines whether a specific place on the operation screen has been selected (Step SA-10). At Step SA-10, when the control unit 102 determines that a specific place on the operation screen has been selected (Yes at Step SA-10), the process proceeds to the next Step SA-11. On the other hand, at Step SA-10, when the control unit 102 determines that a specific place on the operation screen has not been selected (for example, when an input has not been detected for a predetermined time or the like) (No at Step SA-10), the process is returned to the process of Step SA-1.

Then, the current position information acquiring unit 102g of the terminal apparatus 100 acquires the current position information of a user using the terminal apparatus 100 (Step SA-11).

Then, the name information setting unit 102h of the terminal apparatus 100 sets name information (for example, "gate S" illustrated in FIG. 4) that corresponds to a selectable area (for example, a selectable area illustrated on the lower left side in FIG. 4) selected using the display unit 114 through the input unit 116 at Step SA-10 out of selectable areas (for example, clickable areas surrounded by broken lines in FIG. 4) on the operation screen that are displayed by the process of the operation screen displaying unit 102f at Step SA-9 (Step SA-12). Here, the name information setting unit 102h may set the name information (for example, "gate S" illustrated in FIG. 4) that corresponds to the selectable area selected by using the display unit 114 through the input unit 116 at Step SA-10 as a point of departure or a destination. In addition, the name information setting unit 102h may set the current position information that is acquired by the process of the current position information acquiring unit 102g at Step SA-11 as a point of departure, and the name information (for example, "gate S" illustrated in FIG. 4) that corresponds to the selectable area selected using the display unit 114 through the input unit 116 at Step SA-10 as a destination.

Then, the name information transmitting unit 102i of the terminal apparatus 100 transmits the name information (for example, "gate S" illustrated in FIG. 4) that is set by the process of the name information setting unit 102h at Step SA-12 to the navigation server 200 (Step SA-13).

In other words, when selection of one of selectable areas (selection target areas) is received from a user at Step SA-10, the terminal apparatus 100 transmits information such as the name information to the navigation server 200. In addition, the information that is transmitted to the navigation server 200 by the terminal apparatus 100 may be a character string group (a predetermined number of character strings, which include the selected character string, present in a display area) that is read by an application of the terminal apparatus 100 in advance and the arrangement information thereof. In addition, for example, when OCR is processed on the server side, the terminal apparatus 100 may transmit a selectable area, which has been selected, out of selectable areas, a partial image of the selectable area in a predetermined range, and the arrangement information thereof to the navigation server 200. Furthermore, when a simplified OCR process is performed on the application side of the terminal apparatus 100, and a high-level OCR process is requested to the navigation server 200 side, the terminal apparatus 100 may transmit the character string to the navigation server 200 when an image can be read by the terminal apparatus 100, and may transmit a partial image to the navigation server 200 when the image can not be read.

Then, the name information receiving unit 202d of the navigation server 200 receives the name information (for example, "gate S" illustrated in FIG. 4) that is transmitted from the terminal apparatus 100 by the process of the name information transmitting unit 102i at Step SA-13 (Step SA-14).

Then, the guide route searching unit 202e of the navigation server 200 generates guide route data by searching for a guide route that includes the name information (for example, "gate S" illustrated in FIG. 4) received by the process of the name information receiving unit 202d at Step SA-14 as the point of departure or the destination using the traffic network data that is stored in the traffic network database 206e (Step SA-15). Here, the guide route searching unit 202e may generate the guide route data by searching for a guide route that is from a point of departure to a destination received by the process of the name information receiving unit 202d at Step SA-14 using the traffic network data that is stored in the traffic network database 206e. In addition, the guide route searching unit 202e may search for a guide route that passes through a transit point.

Then, the guide information extracting unit 202f of the navigation server 200 extracts guide information that coincides with name information from the guide information database 206b based on the name information (for example, "gate S" illustrated in FIG. 4) that is received by the process of the name information receiving unit 202d at Step SA-14 (Step SA-16). Here, when the name information received by the process of the name information receiving unit 202d at Step SA-14 represents a station name (for example, downside K, town J, and town A illustrated in FIG. 4), the guide information extracting unit 202f may extract time table data that corresponds to the station name from the guide information database 206b. On the other hand, when the name information received by the name information receiving unit 202d represents a facility name (for example, although not illustrated in the drawings, a facility name such as tower T, building S, and college A), the guide information extracting unit 202f may extract POI information that corresponds to the facility name from the guide information database 206b. In addition, the guide information extracting unit 202f may further include guide route data that is generated by the guide route searching unit 202e in the guide information.

In other words, the navigation server 200 receives information such as a character string selected by a user, character strings adjacent thereto, the arrangement information thereof, and the like and acquires exact station information and the like that correspond to the selected character string from the received information by searching a database. In addition, the navigation server 200 may further include guide route data acquired by searching a transfer search using a designated station as a destination in the guide information. Furthermore, the navigation server 200 may further include detailed information such as a time table that corresponds to the designated place in the guide information.

Then, the guide information transmitting unit 202g of the navigation server 200 transmits the guide information extracted by the process of the guide information extracting unit 202f at Step SA-16 to the terminal apparatus 100 (Step SA-17).

Then, the guide information receiving unit 102j of the terminal apparatus 100 receives the guide information that is transmitted from the navigation server 200 by the process of the guide information transmitting unit 202g at Step SA-17 (Step SA-18). Here, the guide information receiving unit 102j may store the guide information that is received at Step SA-18 in the guide information file 106a.

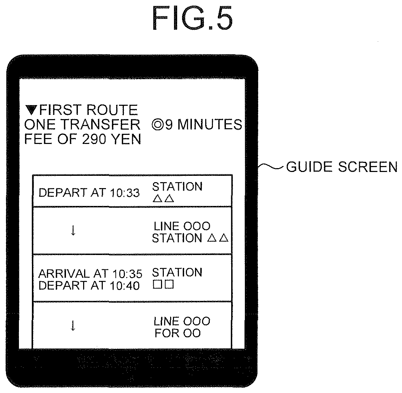

Then, the guide screen generating unit 102k of the terminal apparatus 100 generates a guide screen that includes at least a part of the guide information that is received by the process of the guide information receiving unit 102j at Step SA-18 (Step SA-19). Here, when time table data is included in the guide information that is received by the process of the guide information receiving unit 102j at Step SA-18, the guide screen generating unit 102k may generate a guide screen that includes the time table data. In addition, when POI information is included in the guide information that is received by the process of the guide information receiving unit 102j at Step SA-18, the guide screen generating unit 102k may generate a guide screen that includes the POI information. Furthermore, when guide route data is included in the guide information that is received by the guide information receiving unit 102j at Step SA-18, the guide screen generating unit 102k may generate a guide screen that includes the guide route data as illustrated in FIG. 5 to be described later. Thereafter, the process ends.

Here, an example of the guide screen in this embodiment will be explained with reference to FIG. 5. As an example, when a map that is a photographing target is a route map (for example, a route map of a subway), when a selectable area of "gate S" is selected on the operation screen of the route map illustrated in FIG. 4, the guide screen generating unit 102k generates a guide screen on which a guide route as illustrated in FIG. 5 is displayed. For example, the guide screen generating unit 102k, as illustrated in FIG. 5, generates a guide screen on which a guide route that departs from "station XX" at 10:33, has one transfer at "station YY" and a fee of 290 Yen up to station "gate S" as a destination, and takes nine minutes is displayed as a first route.

Referring back to FIG. 2, the guide screen displaying unit 102m of the terminal apparatus 100 displays at least a part of the guide screen, which is generated by the guide screen generating unit 102k at Step SA-19, as illustrated in FIG. 5 on the display unit 114 (Step SA-20). Thereafter, the process ends.

As above, an example of the process of the navigation system according to the first embodiment has been explained.

### Second Example (not covered by the invention)

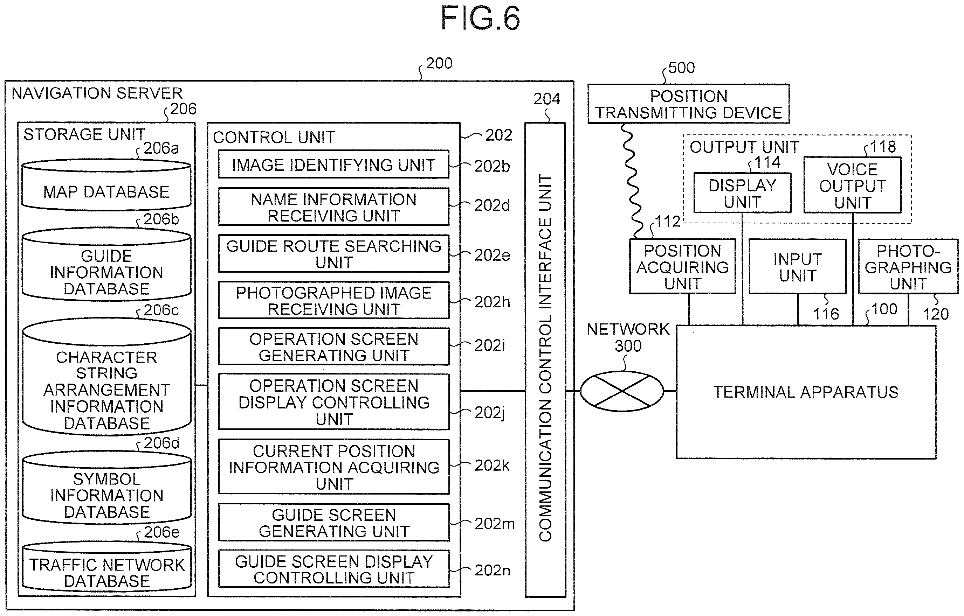

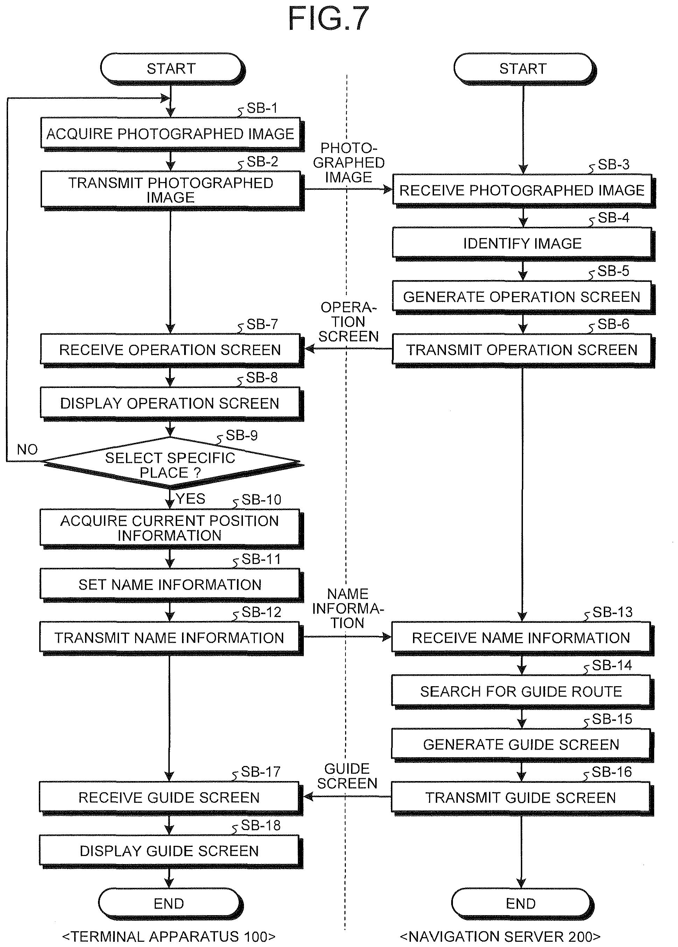

Subsequently, the second example not covered by the invention (navigation server 200 (server-leading type)) of the present invention will be explained with reference to FIGS. 6 and 7. Here, FIG. 6 is a block diagram for illustrating an example of the configuration of the navigation server 200 according to the second example not covered by the invention and conceptually illustrates only a part of the configuration that relates to the present invention. In addition, FIG. 7 is a flowchart for illustrating an example of the process of the navigation server 200 according to the second example not covered by the invention.

In the second example (not covered by the invention), the navigation server 200 generates data to be displayed on the display unit 114 of the terminal apparatus 100 and transmits the data to the terminal apparatus 100, thereby causing the display unit 114 of the terminal apparatus 100 to perform a function. As above, the second example not covered by the invention is different from the other embodiments in that the process is performed in a server-leading manner by the navigation server 200.

### Configuration of Navigation Server 200 (Server-Leading Type)

First, an example of the configuration of the navigation server 200 (server-leading type) according to the second example not covered by the invention will be explained below with reference to FIG. 6.

As illustrated in FIG. 6, the navigation server 200 according to the second example not covered by the invention at least includes a control unit 202 and a storage unit 206 that are communicably connected to a terminal apparatus 100 that at least includes a position acquiring unit 112, an output unit (a display unit 114 and a voice output unit 118), an input unit 116, an photographing unit 120, and a control unit 102. For example, an example of the communication includes a remote communication and the like such as wired and wireless communications performed through a network 300. The units of the navigation server 200 and the terminal apparatus 100 are connected to each other through arbitrary communication lines in a communicable manner.

In FIG. 6, the navigation server 200 has functions of receiving a photographed image that is transmitted from the terminal apparatus 100, identifying a display content from the photographed image that is received and specifies at least a part of the map data that corresponds to the photographed image from the map database 206a based on the identified display content, generating an operation screen, used for selecting the specific place, having display areas of the name information that is included in the map data set as selectable areas using the map data that is specified, and displaying the operation screen on the display unit 114 by transmitting the operation screen that is generated to the terminal apparatus 100. In addition, the navigation server 200 has functions of receiving the name information that corresponds to the selectable area transmitted from the terminal apparatus 100, extracting the guide information that coincides with the name information from the guide information database 206b based on the name information that is received and generates a guide screen that includes at least a part of the extracted guide information, and displaying the guide screen on the display unit 114 by transmitting the guide screen that is generated to the terminal apparatus 100. As above, according to the second example not covered by the invention, the navigation server 200 is configured as a server-leading type, and the operation screen and the display screen are generated not by identifying and transmitting a display content from the photographed image using the terminal apparatus 100 as the first embodiment, but by identifying the photographed image that is transmitted from the terminal apparatus 100 on the navigation server 200 side, which is different from the first embodiment.

Here, the functions of the communication control interface unit 204 and the storage unit 206 (the map database 206a, the guide information database 206b, the character string arrangement information database 206c, the symbol information database 206d, and the traffic network database 206e) of the navigation server 200 and the functions of the position acquiring unit 112, the display unit 114, the input unit 116, the voice output unit 118, and the photographing unit 120 of the terminal apparatus 100 are the same as those of the first embodiment, and thus explanation thereof will not be presented.

In FIG. 6, the control unit 202 includes an internal memory that stores a control program such as OS, a program specifying various processing procedures, and necessary data. The control unit 202 performs information processing for executing various pieces of processing by using these programs. The control unit 202 functionally and conceptually includes the image identifying unit 202b, the name information receiving unit 202d, the guide route searching unit 202e, a photographed image receiving unit 202h, an operation screen generating unit 202i, an operation screen display controlling unit 202j, a current position information acquiring unit 202k, a guide screen generating unit 202m, and a guide screen display controlling unit 202n.

Here, the image identifying unit 202b is an image identifying unit that identifies a display content from the photographed image that is received by the photographed image receiving unit 202h and specifies at least a part of map data that corresponds to the photographed image from the map database 206a based on the identified display content. Here, the image identifying unit 202b may specify a place that corresponds to the photographed area of the photographed image by referring to map data (for example, map data such as a route map) that is stored in the map database 206a based on at least one of character strings, the arrangements of the character strings, and symbols that are included in the display content, thereby specifying at least a part of the map data that corresponds to the photographed image from the map database 206a. In addition, when the character string arrangement information database 206c is included, the image identifying unit 202b may extract character string arrangement information that corresponds to at least one of the character strings and the arrangements of the character strings from the character string arrangement information database 206c and specify at least a part of map data that corresponds to the photographed image from the map database 206a based on the extracted character string arrangement information. Furthermore, when the symbol information database 206d is included, the image identifying unit 202b may extract symbol information that corresponds to the symbols included in the display content from the symbol information database 206d and specify at least a part of map data that corresponds to the photographed image from the map database 206a based on the extracted symbol information.

Here, the name information receiving unit 202d is a name information receiving unit that receives the name information that corresponds to the selectable area transmitted from the terminal apparatus 100.

Here, the guide route searching unit 202e is a guide route searching unit that generates guide route data by searching for a guide route that includes the point of departure or the destination that is received by the name information receiving unit 202d by using the traffic network data that is stored in the traffic network database 206e. Here, the guide route searching unit 202e may generate the guide route data by searching for a guide route that is from the point of departure to the destination received by the name information receiving unit 202d using the traffic network data that is stored in the traffic network database 206e. In addition, the guide route searching unit 202e may search for a guide route that passes through a transit point.

Here, the photographed image receiving unit 202h is a photographed image receiving unit that receives the photographed image that is transmitted from the terminal apparatus 100.

Here, the operation screen generating unit 202i is an operation screen generating unit that generates an operation screen, on which display areas of name information included in the map data are set as selectable areas, used for selecting a specific place by using the map data that is specified by the image identifying unit 202b. Here, the operation screen generating unit 202i may generate an operation screen on which display areas of name information included in the map data are set as selectable areas on the photographed image by using the photographed image that is received by the photographed image receiving unit 202h and the map data that is specified by the image identifying unit 202b.

Here, the operation screen display controlling unit 202j is an operation screen display controlling unit that transmits the operation screen that is generated by the operation screen generating unit 202i to the terminal apparatus 100, whereby displaying the operation screen on the display unit 114.

The current position information acquiring unit 202k is a current position information acquiring unit that acquires the current position information of a user using the terminal apparatus 100. Here, the current position information acquiring unit 202k may receive a position information signal that is received from the position transmitting device 500 by the position acquiring unit 112 of the terminal apparatus 100 from the terminal apparatus 100 and acquire position information that is calculated based on the position information signal as the current position information of the user using the terminal apparatus 100. In addition, the current position information acquiring unit 202k may receive position information such as position coordinates of the current position that is input through the input unit 116 of the terminal apparatus 100 by the user and acquire the position information as the current position information of the user using the terminal apparatus 100.

Here, the guide screen generating unit 202m is a guide screen generating unit that extracts guide information that coincides with name information from the guide information database 206b based on the name information that is received by the name information receiving unit 202d and generates a guide screen that at least includes a part of the extracted guide information. Here, when the name information received by the name information receiving unit 202d represents a station name, the guide screen generating unit 202m may extract time table data that corresponds to the station name from the guide information database 206b and generate a guide screen that includes the extracted time table data. On the other hand, when the name information received by the process of the name information receiving unit 202d represents a facility name, the guide screen generating unit 202m may extract POI information that corresponds to the facility name from the guide information database 206b and generate a guide screen that includes the extracted POI information. In addition, the guide screen generating unit 202m may generate a guide screen that includes guide route data that is generated by the guide route searching unit 202e.

Here, the guide screen display controlling unit 202n is a guide screen display controlling unit that transmits the guide screen that is generated by the guide screen generating unit 202m to the terminal apparatus 100, thereby displaying the guide screen on the display unit 114.

As above, an example of the configuration of the navigation server 200 according to the second example not covered by the invention has been explained.

### Process of Navigation Server 200 (Server-Leading Type)

Next, an example of the process of the navigation server 200 according to the second example not covered by the invention configured as above will be explained below in detail with reference to FIG. 7.

As illustrated in FIG. 7, first, the control unit 102 of the terminal apparatus 100 acquires a photographed image by controlling the photographing unit 120 (Step SB-1). Here, the photographed image may include a still image and a moving image.

Then, the control unit 102 of the terminal apparatus 100 transmits the photographed image that is acquired by the process of the control unit 102 at Step SB-1 to the navigation server 200 (Step SB-2).

Then, the photographed image receiving unit 202h receives the photographed image that is transmitted from the terminal apparatus 100 by the process of the control unit 102 at Step SB-2 (Step SB-3).

Then, the image identifying unit 202b identifies a display content from the photographed image that is received by the process of the photographed image receiving unit 202h at Step SB-3 and specifies at least a part of map data that corresponds to the photographed image from the map database 206a based on the identified display content (Step SB-4). Here, the image identifying unit 202b may specify a place that corresponds to the photographed area of the photographed image by referring to map data (for example, map data such as a route map) that is stored in the map database 206a based on at least one of character strings, the arrangements of the character strings, and symbols that are included in the display content, thereby specifying at least a part of the map data that corresponds to the photographed image from the map database 206a. In addition, when the character string arrangement information database 206c is included, the image identifying unit 202b may extract character string arrangement information that corresponds to at least one of the character strings and the arrangements of the character strings from the character string arrangement information database 206c and specify at least a part of map data that corresponds to the photographed image from the map database 206a based on the extracted character string arrangement information. Furthermore, when the symbol information database 206d is included, the image identifying unit 202b may extract symbol information that corresponds to the symbols included in the display content from the symbol information database 206d and specify at least a part of map data that corresponds to the photographed image from the map database 206a based on the extracted symbol information.

Then, the operation screen generating unit 202i generates an operation screen, on which display areas of name information included in the map data are set as selectable areas, used for selecting a specific place by using the map data that is specified by the process of the image identifying unit 202b at Step SB-4 (Step SB-5). Here, the operation screen generating unit 202i may generate an operation screen on which display areas of name information included in the map data are set as selectable areas on the photographed image by using the photographed image that is received by the process of the photographed image receiving unit 202h at Step SB-3 and the map data that is specified by the process of the image identifying unit 202b at Step SB-4.

Then, the operation screen display controlling unit 202j transmits the operation screen that is generated by the process of the operation screen generating unit 202i at Step SB-5 to the terminal apparatus 100 (Step SB-6), whereby displaying the operation screen on the display unit 114 (Steps SB-7 to SB-8). In other words, the operation screen display controlling unit 202j causes the control unit 102 of the terminal apparatus 100 to receive the operation screen that is transmitted from the navigation server 200 and displays at least a part of the received operation screen on the display unit 114.

Here, since the process of Steps SB-9 to SB-12 of the second example not covered by the invention is the same as that of Steps SA-10 to SA-13 of the first embodiment, explanation thereof will not be presented.

Then, the name information receiving unit 202d receives the name information that corresponds to the selectable area transmitted from the terminal apparatus 100 by the process of the control unit 102 at Step SB-12 (Step SB-13).

Then, the guide route searching unit 202e generates guide route data by searching for a guide route that includes the point of departure or the destination that is received by the name information receiving unit 202d at Step SB-13 by using the traffic network data that is stored in the traffic network database 206e (Step SB-14). Here, the guide route searching unit 202e may generate the guide route data by searching for a guide route that is from the point of departure to the destination received by the process of the name information receiving unit 202d at Step SB-13 using the traffic network data that is stored in the traffic network database 206e. In addition, the guide route searching unit 202e may search for a guide route that passes through a transit point.

Then, the guide screen generating unit 202m extracts guide information that coincides with name information from the guide information database 206b based on the name information that is received by the process of the name information receiving unit 202d at Step SB-13 and generates a guide screen that at least includes a part of the extracted guide information (Step SB-15). Here, when the name information received by the process of the name information receiving unit 202d at Step SB-13 represents a station name, the guide screen generating unit 202m may extract time table data that corresponds to the station name from the guide information database 206b and generate a guide screen that includes the extracted time table data. On the other hand, when the name information received by the process of the name information receiving unit 202d at Step SB-13 represents a facility name, the guide screen generating unit 202m may extract POI information that corresponds to the facility name from the guide information database 206b and generate a guide screen that includes the extracted POI information. In addition, the guide screen generating unit 202m may generate a guide screen that includes guide route data that is generated by the process of the guide route searching unit 202e at Step SB-14.

Then, the guide screen display controlling unit 202n transmits the guide screen that is generated by the process of the guide screen generating unit 202m at Step SB-15 to the terminal apparatus 100 (Step SB-16), thereby displaying the guide screen on the display unit 114 (Steps SB-17 to SB-18). In other words, the guide screen display controlling unit 202n causes the control unit 102 of the terminal apparatus 100 to receive the guide screen that is transmitted from the navigation server 200 and displays at least a part of the received guide screen on the display unit 114. Thereafter, the process ends.

As above, an example of the process of the navigation server 200 according to the second example not covered by the invention has been explained.

### Third Example (not covered by the invention)

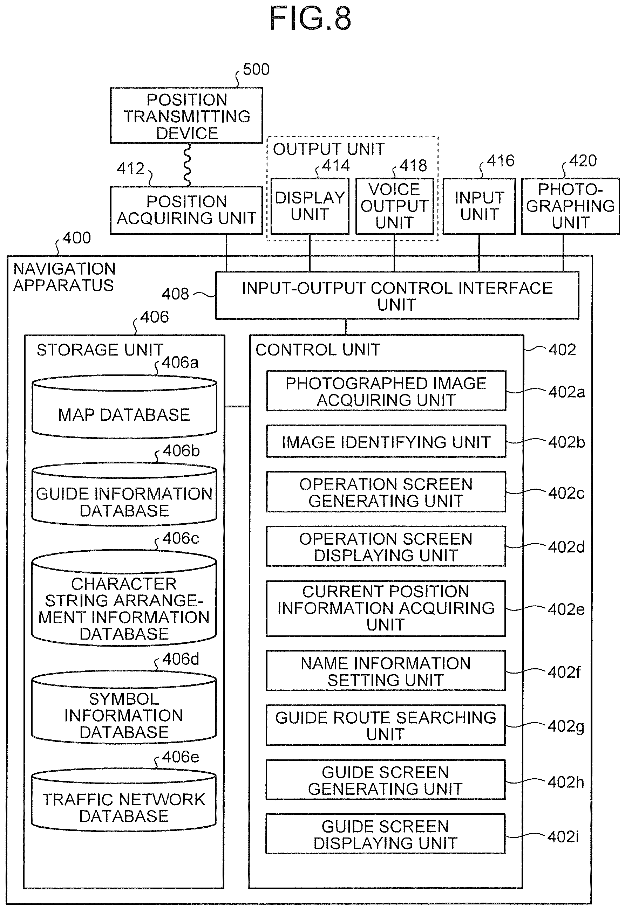

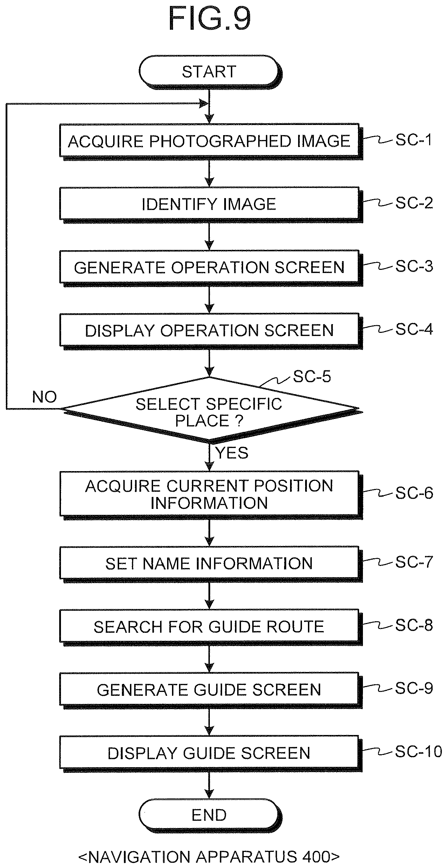

Subsequently, the third example not covered by the invention (navigation apparatus 400 (standalone type)) of the present invention will be explained below with reference to FIGS. 8 and 9. Here, FIG. 8 is a block diagram for illustrating an example of the configuration of the navigation apparatus 400 according to the third example not covered by the invention and conceptually illustrates only a part of the configuration that relates to the present invention. In addition, FIG. 9 is a flowchart for illustrating an example of the process of the navigation apparatus 400 according to the third example not covered by the invention.

In addition, according to the third example not covered by the invention, all the functions are integrated in the navigation apparatus 400, and the navigation apparatus 400 has functions of acquiring a photographed image by controlling a photographing unit 420, identifying a display content from the photographed image that has been acquired, specifying at least a part of map data that corresponds to the photographed image from the map database 406a based on the identified display content, generating an operation screen, on which display areas of name information included in the map data are set as selectable areas, used for selecting a specific place by using the specified map data, displaying at least a part of the generated operation screen on a display unit 414, extracting guide information that coincides with name information from the guide information database 406b based on the set name information that corresponds to the selectable area that is selected through an input unit 416 using the display unit 414 out of selectable areas on the displayed operation screen, generating a guide screen that includes at least a part of the extracted guide information, displaying at least a part of the generated guide screen on the display unit 414 and the like, without being connected to the navigation server 200. As above, the third example not covered by the invention is different from the other embodiments in that the navigation apparatus 400 is configured as a standalone type and independently performs the process.

### Configuration of Navigation Apparatus 400 (Standalone Type)

First, an example of the configuration of the navigation apparatus 400 (standalone type) according to the third example not covered by the invention will be explained below with reference to FIG. 8.

As illustrated in FIG. 8, the navigation apparatus 400 according to the third example not covered by the invention of the present invention at least includes a position acquiring unit 412, an output unit (a display unit 414 and a voice output unit 418), an input unit 416, a photographing unit 420, a control unit 402, and a storage unit 406. These units of the navigation apparatus 400 may be connected to each other in a communicable manner through arbitrary communication lines. The navigation apparatus 400, for example, may be any type of a navigation terminal such as a portable navigation device (PND), any type of an information processing apparatus such as a notebook-type personal computer, a mobile terminal apparatus such as a cellular phone, a PHS, or a PDA.

In FIG. 8, the functions of an input-output control interface unit 408, the position acquiring unit 412, the display unit 414, the input unit 416, the voice output unit 418, and the photographing unit 420 are the same as those of the first embodiment, and thus explanation thereof will not be presented here. In addition, the functions of units (a map database 406a, a guide information database 406b, a character string arrangement information database 406c, a symbol information database 406d, and a traffic network database 406e, and the like) of the storage unit 406 are the same as those of the first embodiment except that the units are included not in the navigation server 200 but in the navigation apparatus 400, and thus explanation thereof will not be presented here.

In addition, the functions of units (a photographed image acquiring unit 402a to a guide screen displaying unit 402i and the like) of the control unit 402 are basically the same as those of the first embodiment except that the control unit 402 does not include transmitting and receiving units due to the standalone type of the navigation apparatus 400 according to this example not covered by the invention.

In FIG. 8, the control unit 402 includes an internal memory that stores a control program such as OS, a program specifying various processing procedures, and necessary data. The control unit 402 performs information processing for executing various pieces of processing by using these programs. The control unit 402 functionally and conceptually includes a photographed image acquiring unit 402a, an image identifying unit 402b, an operation screen generating unit 402c, an operation screen displaying unit 402d, a current position information acquiring unit 402e, a name information setting unit 402f, a guide route searching unit 402g, a guide screen generating unit 402h, a guide screen displaying unit 402i.

Among them, the photographed image acquiring unit 402a is a photographed image acquiring unit that acquires a photographed image by controlling the photographing unit 420. Here, the photographed image may include a still image and a moving image.

Here, the image identifying unit 402b is an image identifying unit that identifies a display content from the photographed image that is acquired by the photographed image acquiring unit 402a and specifies at least a part of map data that corresponds to the photographed image from the map database 406a based on the identified display content. Here, the image identifying unit 402b may specify a place that corresponds to the photographed area of the photographed image by referring to map data (for example, map data such as a route map) that is stored in the map database 406a based on at least one of character strings, the arrangements of the character strings, and symbols that are included in the display content, thereby specifying at least a part of the map data that corresponds to the photographed image from the map database 406a. In addition, when the character string arrangement information database 406c is included, the image identifying unit 402b may extract character string arrangement information that corresponds to at least one of the character strings and the arrangements of the character strings from the character string arrangement information database 406c and specify at least a part of map data that corresponds to the photographed image from the map database 406a based on the extracted character string arrangement information. Furthermore, when the symbol information database 406d is included, the image identifying unit 402b may extract symbol information that corresponds to the symbols included in the display content from the symbol information database 406d and specify at least a part of map data that corresponds to the photographed image from the map database 406a based on the extracted symbol information.

Here, the operation screen generating unit 402c is an operation screen generating unit that generates an operation screen, on which display areas of name information included in the map data are set as selectable areas, used for selecting a specific place by using the map data that is specified by the image identifying unit 402b. Here, the operation screen generating unit 402c may generate an operation screen on which display areas of name information included in the map data are set as selectable areas on the photographed image by using the photographed image that is acquired by the photographed image acquiring unit 402a and the map data that is specified by the image identifying unit 402b.

Here, the operation screen displaying unit 402d is an operation screen displaying unit that displays at least a part of the operation screen generated by the operation screen generating unit 402c on the display unit 414.

Here, the current position information acquiring unit 402e is a current position information acquiring unit that acquires the current position information of a user using the navigation apparatus 400. Here, the current position information acquiring unit 402e may acquire the current position information of a user using the navigation apparatus 400 for every predetermined time (predetermined period) (for example, every one second or every three minutes). In addition, the current position information acquiring unit 402e may acquire position information that is calculated based on the position information signal received by the position acquiring unit 412 from the position transmitting device 500 as the current position information of the user using the navigation apparatus 400. Furthermore, the current position information acquiring unit 402e may further acquire azimuth information such as the direction of travel of the navigation apparatus 400 that is detected by the azimuth sensor of the position acquiring unit 412 or the like as the current position information of the user using the navigation apparatus 400.

In addition, the current position information acquiring unit 402e may acquire position information such as position coordinates of the current position that is input through the input unit 416 by a user as the current position information of the user using the navigation apparatus 400. Here, the current position that is based on the current position information that is input through the input unit 416 by the user may be a position at which the user is actually present or a virtual current position (for example, an arbitrary place such as a station or an airport located at Osaka that is selected by a user in Tokyo) that is arbitrarily selected by the user. For example, the current position information acquiring unit 402e may acquire coordinates designated (for example, through a designation operation performed on a touch panel-type display unit 414) by a user on the display screen of map data that is displayed on the display unit 414 through the input unit 416 as the current position information of the user using the navigation apparatus 400. In addition, the current position information acquiring unit 402e may further acquire azimuth information designated by a user on the display screen of the map data displayed on the display unit 414 through the input unit 416 as the current position information of the user using the navigation apparatus 400.

Here, the name information setting unit 402f is a name information setting unit that sets name information that corresponds to the selectable area selected using the display unit 414 through the input unit 416 out of the selectable areas on the operation screen that are displayed by the operation screen displaying unit 402d. Here, the name information setting unit 402f may set the name information that corresponds to the selectable area that is selected using the display unit 414 through the input unit 416 as a point of departure or a destination. In addition, the name information setting unit 402f may set the current position information that is acquired by the current position information acquiring unit 402e as a point of departure and set the name information that corresponds to the selectable area that is selected using the display unit 414 through the input unit 416 as a destination.

Here, the guide route searching unit 402g is a guide route searching unit that searches for a guide route that includes the point of departure or the destination that is set by the name information setting unit 402f by using the traffic network data that is stored in the traffic network database 406e and generates guide route data. Here, the guide route searching unit 402g may search for a guide route that is from the point of departure to the destination set by the name information setting unit 402f by using the traffic network data that is stored in the traffic network database 406e and generates guide route data. In addition, the guide route searching unit 402g may search for a guide route that passes through a transit point.

Here, the guide screen generating unit 402h is a guide screen generating unit that extracts guide information that coincides with name information from the guide information database 406b based on the name information that is set by the name information setting unit 402f and generates a guide screen that at least includes a part of the extracted guide information. Here, when the name information set by the name information setting unit 402f represents a station name, the guide screen generating unit 402h may extract time table data that corresponds to the station name from the guide information database 406b and generate a guide screen that includes the extracted time table data. On the other hand, when the name information set by the name information setting unit 402f represents a facility name, the guide screen generating unit 402h may extract POI information that corresponds to the facility name from the guide information database 406b and generate a guide screen that includes the extracted POI information. In addition, the guide screen generating unit 402h may generate a guide screen that includes guide route data that is generated by the guide route searching unit 402g.

Here, the guide screen displaying unit 402i is a guide screen displaying unit that displays at least a part of the guide screen that is generated by the guide screen generating unit 402h on the display unit 414.

As above, the example of the configuration of the navigation apparatus 400 according to the third example not covered by the invention has been explained.

### Process of Navigation Apparatus 400 (Standalone Type)

Next, an example of the process of the navigation apparatus 400 according to the third example not covered by the invention configured in this way will be explained below in detail with reference to FIG. 9.

As illustrated in FIG. 9, first, the photographed image acquiring unit 402a acquires a photographed image by controlling the photographing unit 420 (Step SC-1). Here, the photographed image may include a still image and a moving image.

Then, the image identifying unit 402b identifies a display content from the photographed image that is acquired by the process of the photographed image acquiring unit 402a at Step SC-1 and specifies at least a part of map data that corresponds to the photographed image from the map database 406a based on the identified display content (Step SC-2). Here, the image identifying unit 402b may specify a place that corresponds to the photographed area of the photographed image by referring to map data (for example, map data such as a route map) that is stored in the map database 406a based on at least one of character strings, the arrangements of the character strings, and symbols that are included in the display content, thereby specifying at least a part of the map data that corresponds to the photographed image from the map database 406a. In addition, when the character string arrangement information database 406c is included, the image identifying unit 402b may extract character string arrangement information that corresponds to at least one of the character strings and the arrangements of the character strings from the character string arrangement information database 406c and specify at least a part of map data that corresponds to the photographed image from the map database 406a based on the extracted character string arrangement information. Furthermore, when the symbol information database 406d is included, the image identifying unit 402b may extract symbol information that corresponds to the symbols included in the display content from the symbol information database 406d and specify at least a part of map data that corresponds to the photographed image from the map database 406a based on the extracted symbol information.

Then, the operation screen generating unit 402c generates an operation screen, on which display areas of name information included in the map data are set as selectable areas, used for selecting a specific place by using the map data that is specified by the process of the image identifying unit 402b at Step SC-2 (Step SC-3). Here, the operation screen generating unit 402c may generate an operation screen on which display areas of name information included in the map data are set as selectable areas on the photographed image by using the photographed image that is acquired by the process of the photographed image acquiring unit 402a at Step SC-1 and the map data that is specified by the process of the image identifying unit 402b at Step SC-2.

Then, the operation screen displaying unit 402d displays at least a part of the operation screen generated by the process of the operation screen generating unit 402c at Step SC-3 on the display unit 414 (Step SC-4).

Then, the control unit 402 determines whether a specific place located on the operation screen has been selected (Step SC-5). At Step SC-5, when the control unit 402 determines that a specific place located on the operation screen has been selected (Yes at Step SC-5), the process proceeds to the process of the next Step SC-6. On the other hand, at Step SC-5, when the control unit 402 determines that a specific place located on the operation screen has not been selected (for example, when an input has not been detected for a predetermined time) (No at Step SC-5), the process is returned to the process of Step SC-1.

Then, the current position information acquiring unit 402e acquires the current position information of the user using the navigation apparatus 400 (Step SC-6).

Then, the name information setting unit 402f sets name information that corresponds to the selectable area selected using the display unit 414 through the input unit 416 at Step SC-5 out of the selectable areas on the operation screen that are displayed by the process of the operation screen displaying unit 402d at Step SC-4 (Step SC-7). Here, the name information setting unit 402f may set the name information that corresponds to the selectable area that is selected using the display unit 414 through the input unit 416 at Step SC-5 as a point of departure or a destination. In addition, the name information setting unit 402f may set the current position information that is acquired by the process of the current position information acquiring unit 402e at Step SC-6 as a point of departure and set the name information that corresponds to the selectable area that is selected using the display unit 414 through the input unit 416 at Step SC-5 as a destination.

Then, the guide route searching unit 402g searches for a guide route that includes the point of departure or the destination that is set by the process of the name information setting unit 402f at Step SC-7 by using the traffic network data that is stored in the traffic network database 406e and generates guide route data (Step SC-8). Here, the guide route searching unit 402g may search for a guide route that is from the point of departure to the destination set by the process of the name information setting unit 402f at Step SC-7 by using the traffic network data that is stored in the traffic network database 406e and generates guide route data. In addition, the guide route searching unit 402g may search for a guide route that passes through a transit point.

Then, the guide screen generating unit 402h extracts guide information that coincides with name information from the guide information database 406b based on the name information that is set by the process of the name information setting unit 402f at Step SC-7 and generates a guide screen that at least includes a part of the extracted guide information (Step SC-9). Here, when the name information set by the process of the name information setting unit 402f at Step SC-7 represents a station name, the guide screen generating unit 402h may extract time table data that corresponds to the station name from the guide information database 406b and generate a guide screen that includes the extracted time table data. On the other hand, when the name information set by the process of the name information setting unit 402f at Step SC-7 represents a facility name, the guide screen generating unit 402h may extract POI information that corresponds to the facility name from the guide information database 406b and generate a guide screen that includes the extracted POI information. In addition, the guide screen generating unit 402h may generate a guide screen that includes guide route data that is generated by the process of the guide route searching unit 402g at Step SC-8.

Then, the guide screen displaying unit 402i displays at least a part of the guide screen that is generated by the process of the guide screen generating unit 402h at Step SC-9 on the display unit 414 (Step SC-10).

As above, the example of the process of the navigation apparatus 400 according to the third example not covered by the invention has been explained.

### Other Examples (not covered by the invention)

The embodiment of the present invention is explained above. However, the present invention may be implemented in various different embodiments other than the embodiment described above within a technical scope described in claims.

All the automatic processes explained in the present embodiment can be, entirely or partially, carried out manually. Similarly, all the manual processes explained in the present embodiment can be, entirely or partially, carried out automatically by a known method.

The process procedures, the control procedures, specific names, information including registration data for each process and various parameters such as search conditions, display example, and database construction, mentioned in the description and drawings can be changed as required unless otherwise specified.

The constituent elements of the terminal apparatus 100, the navigation server 200, and the navigation apparatus 400 are merely conceptual and may not necessarily physically resemble the structures shown in the drawings.

For example, the process functions performed by each device of the terminal apparatus 100, the navigation server 200, and the navigation apparatus 400, especially the each process function performed by the control unit 102, the control unit 202, and the control unit 402 can be entirely or partially realized by CPU and a computer program executed by the CPU or by a hardware using wired logic. The computer program, recorded on a recording medium to be described later, can be mechanically read by the terminal apparatus 100, the navigation server 200, and the navigation apparatus 400 as the situation demands. In other words, the storage unit 106, the storage unit 206, and the storage unit 406 such as read-only memory (ROM) or HDD stores the computer program that can work in coordination with OS to issue commands to the CPU and cause the CPU to perform various processes. The computer program is first loaded to RAM, and forms a control unit in collaboration with the CPU.

Alternatively, the computer program can be stored in any application program server connected to the terminal apparatus 100, the navigation server 200, and the navigation apparatus 400 via the network 300, and can be fully or partially loaded as the situation demands.

The computer program may be stored in a computer-readable recording medium, or may be structured as a program product. Here, the "recording medium" includes any "portable physical medium" such as a flexible disk, an optical disk, a ROM, an EPROM (Erasable Programmable Read Only Memory), an EEPROM (Electronically Erasable and Programmable Read Only Memory), a CD-ROM (Compact Disk Read Only Memory), an MO (Magneto-Optical disk), a DVD (Digital Versatile Disk), and Blu-ray Disc or can be a "communication medium" such as a communication line or a carrier wave that holds the programs for a short period of time at the time of transmission via a network 300 such as a LAN, a WAN, or the Internet.

In addition, a "program" is a data processing method that is described in an arbitrary language or a description method and may have an arbitrary form such as a source code, a binary code, or the like. Furthermore, the "program" is not necessarily limited to a configuration of a single form and includes a configuration in which the program is configured by a plurality of modules or a plurality of program libraries in a distributed manner and includes a program that achieves the function thereof in cooperation with a separate program that is represented by an OS. In addition, as a specific configuration for reading data from a recording medium in each apparatus illustrated in the embodiments, a reading procedure, an installation procedure after the reading, and the like, a known configuration and a known procedure may be used.

Various databases (the guide information file 106a, the map database 206a, the guide information database 206b, the character string arrangement information database 206c, the symbol information database 206d, the traffic network database 206e, the map database 406a, the guide information database 406b, the character string arrangement information database 406c, the symbol information database 406d, and the traffic network database 406e) stored in the storage unit 106, the storage unit 206, and the storage unit 406 is a storage unit such as a memory device such as a RAM or a ROM, a fixed disk device such as a HDD, a flexible disk, and an optical disk, and stores therein various programs, tables, databases, and web page files used for providing various processing or web sites.

The navigation server 200 may be structured as an information processing apparatus such as known personal computers or workstations, or may be structured by connecting any peripheral devices to the information processing apparatus. Furthermore, the navigation server 200 may be realized by mounting software (including programs, data, or the like) for causing the information processing apparatus to implement the method according of the invention.

The distribution and integration of the device are not limited to those illustrated in the figures. The device as a whole or in parts can be functionally or physically distributed or integrated in an arbitrary unit according to various attachments or how the device is to be used. That is, any embodiments described above can be combined when implemented, or the embodiments can selectively be implemented.

### INDUSTRIAL APPLICABILITY

As described above in detail, according to the present invention, it is possible to provide a navigation system, a terminal apparatus, a navigation server, a navigation apparatus, a navigation method, and a computer program product that are capable of providing an operation screen that enables a user to select an arbitrary place that is present in a photographed image as an input unit of data search conditions and accurately performing a data search for a place selected on the operation screen in an easy manner, and is highly useful in various fields such as the field of information instrument and information processing supporting navigation.

### EXPLANATIONS OF LETTERS OR NUMERALS

100 terminal apparatus
102 control unit
102a photographed image acquiring unit
102b display content extracting unit
102c display content transmitting unit
102d map data receiving unit
102e operation screen generating unit
102f operation screen displaying unit
102g current position information acquiring unit
102h name information setting unit
102i name information transmitting unit
102j guide information receiving unit
102k guide screen generating unit
102m guide screen displaying unit
104 communication control interface unit
106 storage unit
106a guide information file
108 input-output control interface unit
112 position acquiring unit
114 display unit
116 input unit
118 voice output unit
120 photographing unit
200 navigation server
202 control unit
202a display content receiving unit
202b image identifying unit
202c map data transmitting unit
202d name information receiving unit
202e guide route searching unit
202f guide information extracting unit
202g guide information transmitting unit
202h photographed image receiving unit
202i operation screen generating unit
202j operation screen display controlling unit
202k current position information acquiring unit
202m guide screen generating unit
202n guide screen display controlling unit
204 communication control interface unit
206 storage unit
206a map database
206b guide information database
206c character string arrangement information database
206d symbol information database
206e traffic network database
300 network
400 navigation apparatus
402 control unit
402a photographed image acquiring unit
402b image identifying unit
402c operation screen generating unit
402d operation screen displaying unit
402e current position information acquiring unit
402f name information setting unit
402g guide route searching unit
402h guide screen generating unit
402i guide screen displaying unit
406 storage unit
406a map database
406b guide information database
406c character string arrangement information database
406d symbol information database
406e traffic network database
408 input-output control interface unit
412 position acquiring unit
414 display unit
416 input unit
418 voice output unit
420 photographing unit
500 position transmitting device

## Claims

1. A navigation system that connects a navigation server (200) comprising a control unit (202) and a storage unit (206) and a terminal apparatus (100) comprising a photographing unit (120), a display unit (114), an input unit (116), and a control unit (102) to each other in a communicable manner,
wherein the storage unit (206) of the navigation server (200) includes:
a map data storage unit (206a) that stores map data of a map that at least includes name information representing names of specific places; and
a guide information storage unit (206b) that stores guide information of the specific places, and
wherein the control unit (202) of the navigation server (200) includes:
a display content receiving unit (202a) that receives a display content of a photographed image that is transmitted from the terminal apparatus (100);
an image identifying unit (202b) that specifies at least a part of the map data that corresponds to the photographed image from the map data storage unit (206a) based on the display content that is received by the display content receiving unit (202a);
a map data transmitting unit (202c) that transmits the map data that is specified by the image identifying unit (202b) to the terminal apparatus (100);
a name information receiving unit (202d) that receives the name information that is transmitted from the terminal apparatus (100);
a guide information extracting unit (202f) that extracts the guide information that coincides with the name information from the guide information storage unit (206b) based on the name information that is received by the name information receiving unit (202d); and
a guide information transmitting unit (202g) that transmits the guide information that is extracted by the guide information extracting unit (202f) to the terminal apparatus (100),
wherein the control unit (102) of the terminal apparatus (100) includes:
a photographed image acquiring unit (102a) that acquires a photographed image by controlling the photographing unit (120);
a display content extracting unit (102b) that extracts the display content from the photographed image that is acquired by the photographed image acquiring unit (102a);
a display content transmitting unit (102c) that transmits the display content that is extracted by the display content extracting unit (102b) to the navigation server (200);
a map data receiving unit (102d) that receives the map data transmitted from the navigation server (200);
an operation screen generating unit (102e) that generates an operation screen, used for selecting the specific place, having display areas of the name information that is included in the map data set as selectable areas using the map data that is received by the map data receiving unit (102d);
an operation screen displaying unit (102f) that displays at least a part of the operation screen that is generated by the operation screen generating unit (102e) on the display unit (114);
a name information setting unit that sets the name information that corresponds to the selectable area that is selected using the display unit (114) through the input unit (116) out of the selectable areas displayed by the operation screen displaying unit (102f) on the operation screen inputting a data search condition, the input unit being a touch panel;
a name information transmitting unit that transmits the name information that is set by the name information setting unit to the navigation server (200);
a guide information receiving unit (102j) that receives the guide information that is transmitted from the navigation server (200);
a guide screen generating unit (102k) that generates a guide screen that includes at least a part of the guide information that is received by the guide information receiving unit (102j); and
a guide screen displaying unit (102m) that displays at least a part of the guide screen that is generated by the guide screen generating unit (102k) on the display unit (114) .

2. The navigation system (200) according to claim 1,
wherein the name information is information that represents at least one of a station name, a facility name, a prefecture name, a city name, a ward name, town name, village name, and a street name.

3. The navigation system (200) according to claim 1 or 2,
wherein the image identifying unit (202b) specifies at least a part of the map data that corresponds to the photographed image from the map data storage unit (206a) by specifying a place that corresponds to a photographed area of the photographed image by referring to the map data stored in the map data storage unit (206a) based on at least one of a character string, an arrangement of the character string, and a symbol that are included in the display content.

4. The navigation system (200) according to any one of claims 1 to 3,
wherein the storage unit (206) further includes a character string arrangement information storage unit (206c) that stores character string arrangement information relating to a character string of the map and an arrangement of the character string, and
wherein the image identifying unit (202b) extracts the character string arrangement information that corresponds to at least one of the character string and the arrangement of the character string that are included in the display content from the character string arrangement information storage unit (206c) and specifies at least a part of the map data that corresponds to the photographed image from the map data storage unit (206a) based on the extracted character string arrangement information.

5. The navigation system (200) according to any one of claims 1 to 4,
wherein the storage unit (206) further includes a symbol information storage unit (206d) that stores symbol information that relates to a symbol that is used in the map, and
wherein the image identifying unit (202b) extracts the symbol information that corresponds to the symbol included in the display content from the symbol information storage unit (206d) and specifies at least a part of the map data that corresponds to the photographed image from the map data storage unit (206a) based on the extracted symbol information.

6. The navigation system (200) according to any one of claims 2 to 5,
wherein the guide information further includes time table data of means of transportation, and
wherein the guide screen generating unit (202h) extracts the time table data that corresponds to the station name from the guide information storage unit (206b) and generates the guide screen that includes the extracted time table data when the name information set by the name information setting unit (202f) represents the station name.

7. The navigation system (200) according to any one of claims 1 to 6,
wherein the storage unit (206) further includes a traffic network data storage unit (206e) that stores traffic network data,
wherein the name information setting unit (202f) sets the name information that corresponds to the selectable area selected using the display unit (414) through the input unit (416) as a point of departure or a destination,
wherein the control unit (202) further includes a guide route searching unit (202g) that searches for a guide route that includes the point of departure or the destination set by the name information setting unit (202f) using the traffic network data stored in the traffic network data storage unit (206e) and generates guide route data, and
wherein the guide screen generating unit (202h) generates the guide screen that includes the guide route data generated by the guide route searching unit (202g).

8. A terminal apparatus (100) that is connected to a navigation server (200) in a communicable manner, the apparatus comprising:
a photographing unit (120);
a display unit (114);
an input unit (116); and
a control unit (102),
wherein the control unit (102) includes:
a photographed image acquiring unit (102a) that acquires a photographed image by controlling the photographing unit (120);
a display content extracting unit (102b) that extracts the display content from the photographed image that is acquired by the photographed image acquiring unit (102a);
a display content transmitting unit (102c) that transmits the display content that is extracted by the display content extracting unit (102b) to the navigation server (200);
a map data receiving unit (102d) that receives the map data transmitted from the navigation server (200);
an operation screen generating unit (102e) that generates an operation screen, used for selecting the specific place, having display areas of name information that is included in the map data set as selectable areas using the map data that is received by the map data receiving unit (102d);
an operation screen displaying unit (102f) that displays at least a part of the operation screen that is generated by the operation screen generating unit (102e) on the display unit (114);
a name information setting unit that sets the name information that corresponds to the selectable area that is selected using the display unit (114) through the input unit (116) out of the selectable areas displayed by the operation screen displaying unit (102f) on the operation screen inputting a data search condition, the input unit being a touch panel;
a name information transmitting unit that transmits the name information that is set by the name information setting unit to the navigation server (200);
a guide information receiving unit (102j) that receives the guide information that is transmitted from the navigation server (200);
a guide screen generating unit (102k) that generates a guide screen that includes at least a part of the guide information that is received by the guide information receiving unit (102j); and
a guide screen displaying unit (102m) that displays at least a part of the guide screen that is generated by the guide screen generating unit (102k) on the display unit (114) .

9. A navigation server (200) that is connected to a terminal apparatus (100) in a communicable manner, the server comprising:
a control unit (202); and
a storage unit (206),
wherein the storage unit (206) includes:
a map data storage unit (206a) that stores map data of a map that at least includes name information representing names of specific places; and
a guide information storage unit (206b) that stores guide information of the specific places, and
wherein the control unit (202) includes:
a display content receiving unit (202a) that receives a display content of a photographed image that is transmitted from the terminal apparatus (100);
an image identifying unit (202b) that specifies at least a part of the map data that corresponds to the photographed image from the map data storage unit (206a) based on the display content that is received by the display content receiving unit (202a);
a map data transmitting unit (202c) that transmits the map data that is specified by the image identifying unit (202b) to the terminal apparatus (100);
a name information receiving unit (202d) that receives the name information that is transmitted from the terminal apparatus (100);
a guide information extracting unit (202f) that extracts the guide information that coincides with the name information from the guide information storage unit (206b) based on the name information that is received by the name information receiving unit (202d); and
a guide information transmitting unit (202g) that transmits the guide information that is extracted by the guide information extracting unit (202f) to the terminal apparatus (100).

10. A computer program product having a non-transitory computer readable mediums including programmed instructions for a navigation method executed by a terminal apparatus (100) that is connected to a navigation server (200) in a communicable manner, the apparatus including a photographing unit (120), a display unit (114), an input unit (116), and a control unit (102),
wherein the instructions, when executed by the control unit (102), cause the control unit (102) to execute:
a photographed image acquiring step (SA-1) of acquires a photographed image by controlling the photographing unit (120) ;
a display content extracting step (SA-2) of extracting the display content from the photographed image that is acquired at the photographed image acquiring step;
a display content transmitting step (SA-3) of transmits the display content that is extracted at the display content extracting step to the navigation server (200) ;
a map data receiving step (SA-7) of receiving the map data transmitted from the navigation server (200);
an operation screen generating step (SA-8) of generating an operation screen, used for selecting the specific place, having display areas of name information that is included in the map data set as selectable areas using the map data that is received at the map data receiving step;
an operation screen displaying step (SA-9) of displaying at least a part of the operation screen that is generated at the operation screen generating step on the display unit (114);
a name information setting step (SA-12) of setting the name information that corresponds to the selectable area that is selected using the display unit (114) through the input unit (116) out of the selectable areas displayed at the operation screen displaying step on the operation screen, the input unit being a touch panel;
a name information transmitting step (SA-13) of transmitting the name information that is set at the name information setting step to the navigation server (200) inputting a data search condition;
a guide information receiving step (SA-18) of receiving the guide information that is transmitted from the navigation server (200);
a guide screen generating step (SA-19) of generating a guide screen that includes at least a part of the guide information that is received at the guide information receiving step; and
a guide screen displaying step (SA-20) of displaying at least a part of the guide screen that is generated at the guide screen generating step on the display unit (114).

11. A navigation method executed by a navigation server (200) including a control unit, and a storage unit (206) that are connected to a terminal apparatus (100) including a display unit (114) in a communicable manner,
wherein the storage unit (206) includes:
a map data storage unit (206a) that stores map data of a map that at least includes name information representing names of specific places; and
a guide information storage unit (206b) that stores guide information of the specific places,
the method executed by the control unit comprising:
a photographed image receiving step (SB-3) of receiving a photographed image that is transmitted from the terminal apparatus (100);
an image identifying step (SB-4) of identifying a display content from the photographed image that is received at the photographed image receiving step and specifies at least a part of the map data that corresponds to the photographed image from the map data storage unit (206a) based on the identified display content;
an operation screen generating step (SB-5) of generating an operation screen by the navigation server (200), used for selecting the specific place, having display areas of the name information that is included in the map data set as selectable areas using the map data set as selectable areas using the map data that is specified at the image identifying step;
an operation screen display controlling step (SB-6 and 8) of displaying the operation screen on the display unit (114) by transmitting the operation screen that is generated at the operation screen generating step to the terminal apparatus (100);
a name information receiving step (SB-13) of receiving the name information that corresponds to the selectable area transmitted from the terminal apparatus (100);
a guide screen generating step (SB-15) of extracting the guide information that coincides with the name information from the guide information storage unit (206b) based on the name information that is received at the name information receiving step and generating a guide screen that includes at least a part of the extracted guide information; and
a guide screen display controlling step (SB-16 and 18) of displaying the guide screen on the display unit (114) by transmitting the guide screen that is generated at the guide screen generating step to the terminal apparatus (100) .

12. A computer program product having a non-transitory computer readable mediums including programmed instructions for a navigation method executed by a navigation server (200) including a control unit (202), and a storage unit (206) that are connected to a terminal apparatus (100) including a display unit (114) in a communicable manner,
wherein the storage unit (206) includes:
a map data storage unit (206a) that stores map data of a map that at least includes name information representing names of specific places; and
a guide information storage unit (206b) that stores guide information of the specific places,
wherein the instructions, when executed by the control unit (202), cause the control unit (202) to execute:
a photographed image receiving step (SB-3) of receiving a photographed image that is transmitted from the terminal apparatus (100);
an image identifying step (SB-4) of identifying a display content from the photographed image that is received at the photographed image receiving unit and specifying at least a part of the map data that corresponds to the photographed image from the map data storage unit (206a) based on the identified display content;
an operation screen generating step (SB-5) of generating an operation screen, used for selecting the specific place, having display areas of the name information that is included in the map data set as selectable areas using the map data that is specified at the image identifying unit;
an operation screen display controlling step (SB-6 and 8) of displaying the operation screen on the display unit (114) by transmitting the operation screen that is generated at the operation screen generating unit to the terminal apparatus (100);
a name information receiving step (SB-13) of receiving the name information that corresponds to the selectable area transmitted from the terminal apparatus (100);
a guide screen generating step (SB-15) of extracting the guide information that coincides with the name information from the guide information storage unit (206b) based on the name information that is received at the name information receiving unit and generating a guide screen that includes at least a part of the extracted guide information; and
a guide screen display controlling step (SB-16 and 18) of displaying the guide screen on the display unit (114) by transmitting the guide screen that is generated at the guide screen generating unit to the terminal apparatus (100) .

## Patentansprüche

1. Navigationssystem, das einen Navigationsserver (200), der eine Steuereinheit (202) und eine Speichereinheit (206) umfasst, und ein Endgerät (100), das eine Fotografiereinheit (120), eine Anzeigeeinheit (114), eine Eingabeeinheit (116) und eine Steuereinheit (102) umfasst, in einer kommunizierfähigen Weise miteinander verbindet,
wobei die Speichereinheit (206) des Navigationsservers (200) beinhaltet:
eine Kartendaten-Speichereinheit (206a), die Kartendaten einer Karte speichert, die zumindest Namensinformationen beinhaltet, die Namen von spezifischen Orten repräsentieren; und
eine Führungsinformations-Speichereinheit (206b), die Führungsinformationen der spezifischen Orte speichert, und
wobei die Steuereinheit (202) des Navigationsservers (200) beinhaltet:
eine Anzeigeinhalt-Empfangseinheit (202a), die einen Anzeigeinhalt eines fotografierten Bildes empfängt, das von dem Endgerät (100) übertragen wird;
eine Bildidentifizierungseinheit (202b), die zumindest einen Teil der Kartendaten spezifiziert, die dem fotografierten Bild von der Kartendaten-Speichereinheit (206a) entsprechen, basierend auf dem Anzeigeinhalt, der von der Anzeigeinhalt-Empfangseinheit (202a) empfangen wird;
eine Kartendaten-Übertragungseinheit (202c), die die Kartendaten, die durch die Bildidentifizierungseinheit (202b) spezifiziert sind, an das Endgerät (100) überträgt;
eine Namensinformations-Empfangseinheit (202d), die die Namensinformationen empfängt, die von dem Endgerät (100) übertragen werden;
eine Führungsinformations-Extraktionseinheit (202f), die die Führungsinformationen, die mit den Namensinformationen übereinstimmen, aus der Führungsinformations-Speichereinheit (206b) auf der Grundlage der Namensinformationen extrahiert, die von der Namensinformations-Empfangseinheit (202d) empfangen werden; und
eine Führungsinformations-Übertragungseinheit (202g), die die Führungsinformationen, die von der Führungsinformations-Extraktionseinheit (202f) extrahiert werden, an das Endgerät (100) überträgt,
wobei die Steuereinheit (102) des Endgerätes (100) beinhaltet:
eine Fotografiertes-Bild-Erfassungseinheit (102a), die ein fotografiertes Bild durch Steuern der Fotografiereinheit (120) erfasst;
eine Anzeigeinhalt-Extraktionseinheit (102b), die den Anzeigeinhalt aus dem fotografierten Bild extrahiert, das durch die Fotografiertes-Bild-Erfassungseinheit (102a) erfasst wird;
eine Anzeigeinhalt-Übertragungseinheit (102c), die den Anzeigeinhalt, der durch die Anzeigeinhalt-Extraktionseinheit (102b) extrahiert wird, an den Navigationsserver (200) überträgt;
eine Kartendaten-Empfangseinheit (102d), die die von dem Navigationsserver (200) übertragenen Kartendaten empfängt;
eine Operationsbildschirm-Erzeugungseinheit (102e), die einen Operationsbildschirm erzeugt, der zum Auswählen des spezifischen Ortes verwendet wird, der Anzeigebereiche der Namensinformationen aufweist, die in dem Kartendatensatz als auswählbare Bereiche enthalten sind, unter Verwendung der Kartendaten, die von der Kartendaten-Empfangseinheit (102d) empfangen werden;
eine Operationsbildschirm-Anzeigeeinheit (102f), die zumindest einen Teil des Operationsbildschirms, der von der Operationsbildschirm-Erzeugungseinheit (102e) erzeugt wird, auf der Anzeigeeinheit (114) anzeigt;
eine Namensinformations-Einstelleinheit, die die Namensinformationen einstellt, die dem auswählbaren Bereich entsprechen, der unter Verwendung der Anzeigeeinheit (114) über die Eingabeeinheit (116) aus den auswählbaren Bereichen, die durch die Operationsbildschirm-Anzeigeeinheit (102f) auf dem Operationsbildschirm angezeigt werden, unter Eingabe einer Datensuchbedingung ausgewählt wird, wobei die Eingabeeinheit ein Berührungsfeld ist;
eine Namensinformations-Übertragungseinheit, die die Namensinformationen, die durch die Namensinformations-Einstelleinheit eingestellt werden, an den Navigationsserver (200) überträgt;
eine Führungsinformations-Empfangseinheit (102j), die die Führungsinformationen empfängt, die von dem Navigationsserver (200) übertragen werden;
eine Führungsbildschirm-Erzeugungseinheit (102k), die einen Führungsbildschirm erzeugt, der zumindest einen Teil der Führungsinformationen beinhaltet, die von der Führungsinformations-Empfangseinheit (102j) empfangen werden; und
eine Führungsbildschirm-Anzeigeeinheit (102m), die zumindest einen Teil des Führungsbildschirms, der von der Führungsbildschirm-Erzeugungseinheit (102k) erzeugt wird, auf der Anzeigeeinheit (114) anzeigt.

2. Navigationssystem (200) nach Anspruch 1,
wobei die Namensinformationen Informationen sind, die zumindest einen von einem Stationsnamen, einem Einrichtungsnamen, einem Präfekturnamen, einem Stadtnamen, einem Bezirksnamen, einem Ortsnamen, einem Dorfnamen und einem Straßennamen repräsentieren.

3. Navigationssystem (200) nach Anspruch 1 oder 2,
wobei die Bildidentifizierungseinheit (202b) zumindest einen Teil der Kartendaten spezifiziert, die dem fotografierten Bild aus der Kartendaten-Speichereinheit (206a) entsprechen, indem ein Ort spezifiziert wird, der einem fotografierten Bereich des fotografierten Bildes entspricht, indem auf die in der Kartendaten-Speichereinheit (206a) gespeicherten Kartendaten Bezug genommen wird, basierend auf zumindest einem aus einer Zeichenkette, einer Anordnung der Zeichenkette und einem Symbol, die in dem Anzeigeinhalt enthalten sind.

4. Navigationssystem (200) nach einem der Ansprüche 1 bis 3,
wobei die Speichereinheit (206) weiterhin eine Zeichenkettenanordnungsinformations-Speichereinheit (206c) beinhaltet, die Zeichenkettenanordnungs-Informationen speichert, die sich auf eine Zeichenkette der Karte und eine Anordnung der Zeichenkette beziehen, und
wobei die Bildidentifizierungseinheit (202b) die Zeichenkettenanordnungs-Informationen, die zumindest einer der Zeichenkette und der Anordnung der Zeichenkette entsprechen, die in dem Anzeigeinhalt enthalten sind, aus der Zeichenkettenanordnungsinformations-Speichereinheit (206c) extrahiert und zumindest einen Teil der Kartendaten, die dem fotografierten Bild entsprechen, aus der Kartendaten-Speichereinheit (206a) auf der Grundlage der extrahierten Zeichenkettenanordnungsinformationen spezifiziert.

5. Navigationssystem (200) nach einem der Ansprüche 1 bis 4,
wobei die Speichereinheit (206) weiterhin eine Symbolinformations-Speichereinheit (206d) beinhaltet, die Symbolinformationen speichert, die sich auf ein Symbol beziehen, das in der Karte verwendet wird, und
wobei die Bildidentifizierungseinheit (202b) die Symbolinformationen, die dem in dem Anzeigeinhalt enthaltenen Symbol entsprechen, aus der Symbolinformations-Speichereinheit (206d) extrahiert und zumindest einen Teil der Kartendaten, die dem fotografierten Bild entsprechen, aus der Kartendaten-Speichereinheit (206a) auf der Grundlage der extrahierten Symbolinformation spezifiziert.

6. Navigationssystem (200) nach einem der Ansprüche 2 bis 5,
wobei die Führungsinformationen weiterhin Fahrplandaten von Transportmitteln enthalten und
wobei die Führungsbildschirm-Erzeugungseinheit (202h) die Zeittabellendaten, die dem Stationsnamen entsprechen, aus der Führungsinformations-Speichereinheit (206b) extrahiert und den Führungsbildschirm erzeugt, der die extrahierten Zeittabellendaten beinhaltet, wenn die durch die Namensinformations-Einstelleinheit (202f) eingestellten Namensinformationen den Stationsnamen repräsentieren.

7. Navigationssystem (200) nach einem der Ansprüche 1 bis 6,
wobei die Speichereinheit (206) weiterhin eine Verkehrsnetzdaten-Speichereinheit (206e) beinhaltet, die Verkehrsnetzdaten speichert,
wobei die Namensinformations-Einstelleinheit (202f) die Namensinformationen einstellt, die dem wählbaren Bereich entsprechen, der unter Verwendung der Anzeigeeinheit (414) über die Eingabeeinheit (416) als Ausgangs- oder Zielpunkt ausgewählt wurde,
wobei die Steuereinheit (202) weiterhin eine Führungsrouten-Sucheinheit (202g) beinhaltet, die unter Verwendung der in der Verkehrsnetzdaten-Speichereinheit (206e) gespeicherten Verkehrsnetzdaten nach einer Führungsroute sucht, die den von der Namensinformations-Einstelleinheit (202f) gesetzten Start- oder Zielpunkt beinhaltet, und Führungsroutendaten erzeugt, und
wobei die Führungsbildschirm-Erzeugungseinheit (202h) den Führungsbildschirm erzeugt, der die von der Führungsrouten-Sucheinheit (202g) erzeugten Führungsroutendaten beinhaltet.

8. Endgerät (100), das mit einem Navigationsserver (200) in einer kommunizierfähigen Weise verbunden ist, wobei das Gerät umfasst:
eine Fotografiereinheit (120);
eine Anzeigeeinheit (114);
eine Eingabeeinheit (116); und
eine Steuereinheit (102),
wobei die Steuereinheit (102) beinhaltet:
eine Fotografiertes-Bild-Erfassungseinheit (102a), die ein fotografiertes Bild durch Steuern der Fotografiereinheit (120) erfasst;
eine Anzeigeinhalt-Extraktionseinheit (102b), die den Anzeigeinhalt aus dem fotografierten Bild extrahiert, das durch die Fotografiertes-Bild-Erfassungseinheit (102a) erfasst wird;
eine Anzeigeinhalt-Übertragungseinheit (102c), die den Anzeigeinhalt, der durch die Anzeigeinhalt-Extraktionseinheit (102b) extrahiert wird, an den Navigationsserver (200) überträgt;
eine Kartendaten-Empfangseinheit (102d), die die von dem Navigationsserver (200) übertragenen Kartendaten empfängt;
eine Operationsbildschirm-Erzeugungseinheit (102e), die einen Operationsbildschirm erzeugt, der zum Auswählen des spezifischen Ortes verwendet wird, mit Anzeigebereichen von Namensinformationen, die in dem Kartendatensatz als auswählbare Bereiche enthalten sind, unter Verwendung der Kartendaten, die von der Kartendaten-Empfangseinheit (102d) empfangen werden;
eine Operationsbildschirm-Anzeigeeinheit (102f), die zumindest einen Teil des Operationsbildschirms, der von der Operationsbildschirm-Erzeugungseinheit (102e) erzeugt wird, auf der Anzeigeeinheit (114) anzeigt;
eine Namensinformations-Einstelleinheit, die die Namensinformationen einstellt, die dem auswählbaren Bereich entsprechen, der unter Verwendung der Anzeigeeinheit (114) über die Eingabeeinheit (116) aus den auswählbaren Bereichen, die durch die Operationsbildschirm-Anzeigeeinheit (102f) auf dem Operationsbildschirm angezeigt werden, unter Eingabe einer Datensuchbedingung ausgewählt wird, wobei die Eingabeeinheit ein Berührungsfeld ist;
eine Namensinformations-Übertragungseinheit, die die Namensinformationen, die durch die Namensinformations-Einstelleinheit eingestellt werden, an den Navigationsserver (200) überträgt;
eine Führungsinformations-Empfangseinheit (102j), die die Führungsinformationen empfängt, die von dem Navigationsserver (200) übertragen werden;
eine Führungsbildschirm-Erzeugungseinheit (102k), die einen Führungsbildschirm erzeugt, der zumindest einen Teil der Führungsinformationen beinhaltet, die von der Führungsinformations-Empfangseinheit (102j) empfangen werden; und
eine Führungsbildschirm-Anzeigeeinheit (102m), die zumindest einen Teil des Führungsbildschirms, der von der Führungsbildschirm-Erzeugungseinheit (102k) erzeugt wird, auf der Anzeigeeinheit (114) anzeigt.

9. Navigationsserver (200), der mit einem Endgerät (100) in einer kommunizierfähigen Weise verbunden ist, wobei der Server umfasst:
eine Steuereinheit (202); und
eine Speichereinheit (206),
wobei die Speichereinheit (206) beinhaltet:
eine Kartendaten-Speichereinheit (206a), die Kartendaten einer Karte speichert, die zumindest Namensinformationen beinhaltet, die Namen von spezifischen Orten repräsentieren; und
eine Führungsinformations-Speichereinheit (206b), die Führungsinformationen der spezifischen Orte speichert, und
wobei die Steuereinheit (202) beinhaltet:
eine Anzeigeinhalt-Empfangseinheit (202a), die einen Anzeigeinhalt eines fotografierten Bildes empfängt, das von dem Endgerät (100) übertragen wird;
eine Bildidentifizierungseinheit (202b), die zumindest einen Teil der Kartendaten spezifiziert, die dem fotografierten Bild von der Kartendaten-Speichereinheit (206a) entsprechen, basierend auf dem Anzeigeinhalt, der von der Anzeigeinhalt-Empfangseinheit (202a) empfangen wird;
eine Kartendaten-Übertragungseinheit (202c), die die Kartendaten, die durch die Bildidentifizierungseinheit (202b) spezifiziert sind, an das Endgerät (100) überträgt;
eine Namensinformations-Empfangseinheit (202d), die die Namensinformationen empfängt, die von dem Endgerät (100) übertragen werden;
eine Führungsinformations-Extraktionseinheit (202f), die die Führungsinformationen, die mit den Namensinformationen übereinstimmen, aus der Führungsinformations-Speichereinheit (206b) auf der Grundlage der Namensinformationen extrahiert, die von der Namensinformations-Empfangseinheit (202d) empfangen werden; und
eine Führungsinformations-Übertragungseinheit (202g), die die Führungsinformationen, die von der Führungsinformations-Extraktionseinheit (202f) extrahiert werden, an das Endgerät (100) überträgt.

10. Computerprogrammprodukt, das ein nicht-flüchtiges computerlesbares Medium aufweist, das programmierte Befehle für ein Navigationsverfahren beinhaltet, die von einem Endgerät (100) ausgeführt werden, das mit einem Navigationsserver (200) in einer kommunizierfähigen Weise verbunden ist, wobei das Gerät eine Fotografiereinheit (120), eine Anzeigeeinheit (114), eine Eingabeeinheit (116) und eine Steuereinheit (102) beinhaltet,
wobei die Befehle, wenn sie von der Steuereinheit (102) ausgeführt werden, die Steuereinheit (102) dazu veranlassen auszuführen:
einen Fotografiertes-Bild-Erfassungsschritt (SA-1), bei dem ein fotografiertes Bild durch Steuerung der Fotografiereinheit (120) erfasst wird;
einen Anzeigeinhalt-Extraktionsschritt (SA-2) zum Extrahieren des Anzeigeinhalts aus dem fotografierten Bild, das bei dem Fotografiertes-Bild-Erfassungsschritt erfasst wird;
einen Anzeigeinhalt-Übertragungsschritt (SA-3) zum Übertragen des Anzeigeinhalts, der bei dem Anzeigeinhalt-Extraktionsschritt extrahiert wird, an den Navigationsserver (200);
einen Kartendaten-Empfangsschritt (SA-7) zum Empfangen der von dem Navigationsserver (200) übertragenen Kartendaten;
einen Operationsbildschirm-Erzeugungsschritt (SA-8) zum Erzeugen eines Operationsbildschirms, der zum Auswählen des spezifischen Orts verwendet wird, der Anzeigebereiche von Namensinformationen aufweist, die in dem Kartendatensatz als auswählbare Bereiche enthalten sind, unter Verwendung der Kartendaten, die bei dem Kartendaten-Empfangsschritt empfangen werden;
einen Operationsbildschirm-Anzeigeschritt (SA-9) zum Anzeigen zumindest eines Teils des Operationsbildschirms, der in dem Operationsbildschirm-Erzeugungsschritt erzeugt wird, auf der Anzeigeeinheit (114);
einen Namensinformations-Einstellschritt (SA-12) zum Einstellen der Namensinformationen, die dem auswählbaren Bereich entsprechen, der unter Verwendung der Anzeigeeinheit (114) über die Eingabeeinheit (116) aus den auswählbaren Bereichen ausgewählt wird, die in dem Operationsbildschirm-Anzeigeschritt auf dem Operationsbildschirm angezeigt werden, wobei die Eingabeeinheit ein Berührungsfeld ist;
einen Namensinformationsübertragungsschritt (SA-13) zum Übertragen der Namensinformationen, die bei dem Namensinformations-Einstellschritt eingestellt werden, an den Navigationsserver (200), der eine Datensuchbedingung eingibt;
einen Führungsinformations-Empfangsschritt (SA-18) zum Empfangen der Führungsinformationen, die von dem Navigationsserver (200) übertragen werden;
einen Führungsbildschirmerzeugungsschritt (SA-19) zum Erzeugen eines Führungsbildschirms, der zumindest einen Teil der Führungsinformationen beinhaltet, die bei dem Führungsinformations-Empfangsschritt empfangen werden; und
einen Führungsbildschirm-Anzeigeschritt (SA-20) zum Anzeigen zumindest eines Teils des Führungsbildschirms, der bei dem Führungsbildschirm-Erzeugungsschritt erzeugt wird, auf der Anzeigeeinheit (114).

11. Navigationsverfahren, das von einem Navigationsserver (200) ausgeführt wird, der eine Steuereinheit und eine Speichereinheit (206) beinhaltet, die mit einem Endgerät (100), das eine Anzeigeeinheit (114) beinhaltet, in einer kommunizierfähigen Weise verbunden sind,
wobei die Speichereinheit (206) beinhaltet:
eine Kartendaten-Speichereinheit (206a), die Kartendaten einer Karte speichert, die zumindest Namensinformationen beinhaltet, die Namen von spezifischen Orten repräsentieren; und
eine Führungsinformations-Speichereinheit (206b), die Führungsinformationen der spezifischen Orte speichert,
wobei das von der Steuereinheit ausgeführte Verfahren umfasst:
einen Fotografiertes-Bild-Empfangsschritt (SB-3) zum Empfangen eines fotografierten Bildes, das von dem Endgerät (100) übertragen wird;
einen Bildidentifizierungsschritt (SB-4) zum Identifizieren eines Anzeigeinhalts aus dem fotografierten Bild, das bei dem Fotografiertes-Bild-Empfangsschritt empfangen wird und zumindest einen Teil der Kartendaten spezifiziert, die dem fotografierten Bild aus der Kartendaten-Speichereinheit (206a) entsprechen, basierend auf dem identifizierten Anzeigeinhalt;
einen Operationsbildschirm-Erzeugungsschritt (SB-5) zum Erzeugen eines Operationsbildschirms durch den Navigationsserver (200), der zum Auswählen des spezifischen Ortes verwendet wird, der Anzeigebereiche der Namensinformationen aufweist, die in dem Kartendatensatz als auswählbare Bereiche enthalten sind, unter Verwendung des Kartendatensatzes als auswählbare Bereiche unter Verwendung der Kartendaten, die bei dem Bildidentifizierungsschritt spezifiziert werden;
einen Operationsbildschirm-Anzeigesteuerungsschritt (SB-6 und 8) zum Anzeigen des Operationsbildschirms auf der Anzeigeeinheit (114) durch Übertragen des Operationsbildschirms, der bei dem Operationsbildschirm-Erzeugungsschritt erzeugt wird, an das Endgerät (100);
einen Namensinformations-Empfangsschritt (SB-13) zum Empfangen der Namensinformationen, die dem von dem Endgerät (100) übertragenen wählbaren Bereich entsprechen;
einen Führungsbildschirm-Erzeugungsschritt (SB-15) zum Extrahieren der Führungsinformationen, die mit den Namensinformationen übereinstimmen, aus der Führungsinformations-Speichereinheit (206b) auf der Grundlage der Namensinformationen, die bei dem Namensinformations-Empfangsschritt empfangen werden, und zum Erzeugen eines Führungsbildschirms, der zumindest einen Teil der extrahierten Führungsinformation beinhaltet; und
einen Führungsbildschirm-Anzeigesteuerungsschritt (SB-16 und 18) zum Anzeigen des Führungsbildschirms auf der Anzeigeeinheit (114) durch Übertragen des Führungsbildschirms, der bei dem Führungsbildschirm-Erzeugungsschritt erzeugt wird, an das Endgerät (100).

12. Computerprogrammprodukt, das ein nicht-flüchtiges computerlesbares Medium aufweist, das programmierte Befehle für ein Navigationsverfahren beinhaltet, das von einem Navigationsserver (200) ausgeführt wird, dereine Steuereinheit (202) und eine Speichereinheit (206) beinhaltet, die mit einem Endgerät (100), das eine Anzeigeeinheit (114) beinhaltet, in einer kommunizierfähigen Weise verbunden sind,
wobei die Speichereinheit (206) beinhaltet:
eine Kartendaten-Speichereinheit (206a), die Kartendaten einer Karte speichert, die zumindest Namensinformationen beinhalten, die Namen von spezifischen Orten repräsentieren; und
eine Führungsinformations-Speichereinheit (206b), die Führungsinformationen der spezifischen Orte speichert,
wobei die Befehle, wenn sie von der Steuereinheit (202) ausgeführt werden, die Steuereinheit (202) veranlassen auszuführen:
einen Fotografiertes-Bild-Empfangsschritt (SB-3) zum Empfangen eines fotografierten Bildes, das von dem Endgerät (100) übertragen wird;
einen Bildidentifizierungsschritt (SB-4) zum Identifizieren eines Anzeigeinhalts aus dem fotografierten Bild, das an der Fotografiertes-Bild-Empfangseinheit empfangen wird, und zum Spezifizieren zumindest eines Teils der Kartendaten, die dem fotografierten Bild entsprechen, von der Kartendaten-Speichereinheit (206a) auf der Grundlage des identifizierten Anzeigeinhalts;
einen Operationsbildschirm-Erzeugungsschritt (SB-5) zum Erzeugen eines Operationsbildschirms, der zum Auswählen des spezifischen Ortes verwendet wird, der Anzeigebereiche der Namensinformationen aufweist, die in dem Kartendatensatz als auswählbare Bereiche enthalten sind, unter Verwendung der Kartendaten, die an der Bildidentifizierungseinheit spezifiziert sind;
einen Operationsbildschirm-Anzeigesteuerungsschritt (SB-6 und 8) zum Anzeigen des Operationsbildschirms auf der Anzeigeeinheit (114) durch Übertragen des Operationsbildschirms, der an der Operationsbildschirm-Erzeugungseinheit erzeugt wird, an das Endgerät (100);
einen Namensinformations-Empfangsschritt (SB-13) zum Empfangen der Namensinformationen, die dem von dem Endgerät (100) übertragenen wählbaren Bereich entsprechen;
einen Führungsbildschirm-Erzeugungsschritt (SB-15) zum Extrahieren der Führungsinformationen, die mit den Namensinformationen übereinstimmen, aus der Führungsinformations-Speichereinheit (206b) auf der Grundlage der Namensinformationen, die an der Namensinformations-Empfangseinheit empfangen werden, und zum Erzeugen eines Führungsbildschirms, der zumindest einen Teil der extrahierten Führungsinformationen beinhaltet; und
einen Führungsbildschirm-Anzeigesteuerungsschritt (SB-16 und 18) zum Anzeigen des Führungsbildschirms auf der Anzeigeeinheit (114) durch Übertragen des Führungsbildschirms, der an der Führungsbildschirm-Erzeugungseinheit erzeugt wird, an das Endgerät (100).

## Revendications

1. Système de navigation qui connecte un serveur de navigation (200) comprenant une unité de commande (202) et une unité de stockage (206) et un appareil terminal (100) comprenant une unité de photographie (120), une unité d'affichage (114), une unité d'entrée (116), et une unité de commande (102) l'un à l'autre de manière communicable,
dans lequel l'unité de stockage (206) du serveur de navigation (200) inclut :
une unité de stockage de données de carte (206a) qui stocke des données de carte d'une carte qui incluent au moins des informations de nom représentant des noms d'endroits spécifiques ; et
une unité de stockage d'informations de guidage (206b) qui stocke des informations de guidage des endroits spécifiques, et
dans lequel l'unité de commande (202) du serveur de navigation (200) inclut :
une unité de réception de contenu d'affichage (202a) qui reçoit un contenu d'affichage d'une image photographiée qui est transmis depuis l'appareil terminal (100) ;
une unité d'identification d'image (202b) qui spécifie au moins une partie des données de carte qui correspondent à l'image photographiée depuis l'unité de stockage de données de carte (206a) d'après le contenu d'affichage qui est reçu par l'unité de réception de contenu d'affichage (202a) ;
une unité de transmission de données de carte (202c) qui transmet les données de carte qui sont spécifiées par l'unité d'identification d'image (202b) à l'appareil terminal (100) ;
une unité de réception d'informations de nom (202d) qui reçoit les informations de nom qui sont transmises depuis l'appareil terminal (100) ;
une unité d'extraction d'informations de guidage (202f) qui extrait des informations de guidage qui coïncident avec les informations de nom provenant de l'unité de stockage d'informations de guidage (206b) d'après les informations de nom qui sont reçues par l'unité de réception d'informations de nom (202d) ; et
une unité de transmission d'informations de guidage (202g) qui transmet les informations de guidage qui sont extraites par l'unité d'extraction d'informations de guidage (202f) à l'appareil terminal (100),
dans lequel l'unité de commande (102) de l'appareil terminal (100) inclut :
une unité d'acquisition d'image photographiée (102a) qui acquiert une image photographiée en commandant l'unité de photographie (120) ;
une unité d'extraction de contenu d'affichage (102b) qui extrait le contenu d'affichage depuis l'image photographiée qui est acquise par l'unité d'acquisition d'image photographiée (102a) ;
une unité de transmission de contenu d'affichage (102c) qui transmet le contenu d'affichage qui est extrait par l'unité d'extraction de contenu d'affichage (102b) au serveur de navigation (200) ;
une unité de réception de données de carte (102d) qui reçoit des données de carte transmises depuis le serveur de navigation (200) ;
une unité de génération d'écran de fonctionnement (102e) qui génère un écran de fonctionnement, utilisé pour sélectionner l'endroit spécifique, ayant des zones d'affichage des informations de nom qui sont incluses dans les données de carte réglées en tant que zones sélectionnables à l'aide des données de carte qui sont reçues par l'unité de réception de données de carte (102d) ;
une unité d'affichage d'écran de fonctionnement (102f) qui affiche au moins une partie de l'écran de fonctionnement qui est généré par l'unité de génération d'écran de fonctionnement (102e) sur l'unité d'affichage (114) ;
une unité de réglage d'informations de nom qui règle les informations de nom qui correspondent à la zone sélectionnable qui est sélectionnée à l'aide de l'unité d'affichage (114) par le biais de l'unité d'entrée (116) parmi les zones sélectionnables affichées par l'unité d'affichage d'écran de fonctionnement (102f) sur l'écran de fonctionnement en entrant une condition de recherche de données, l'unité d'entrée étant un panneau tactile ;
une unité de transmission d'informations de nom qui transmet des informations de nom qui sont réglées par l'unité de réglage d'informations de nom au serveur de navigation (200) ;
une unité de réception d'informations de guidage (102j) qui reçoit les informations de guidage qui sont transmises depuis le serveur de navigation (200) ;
une unité de génération d'écran de guidage (102k) qui génère un écran de guidage qui inclut au moins une partie des informations de guidage qui sont reçues par l'unité de réception d'informations de guidage (102j) ; et
une unité d'affichage d'écran de guidage (102m) qui affiche au moins une partie de l'écran de guidage qui est généré par l'unité de génération d'écran de guidage (102k) sur l'unité d'affichage (114).

2. Système de navigation (200) selon la revendication 1,
dans lequel les informations de nom sont des informations qui représentent au moins l'un d'un nom de gare, d'un nom d'établissement, d'un nom de préfecture, d'un nom de grande ville, d'un nom de circonscription, d'un nom de commune, d'un nom de village, et d'un nom de rue.

3. Système de navigation (200) selon la revendication 1 ou 2,
dans lequel l'unité d'identification d'image (202b) spécifie au moins une partie des données de carte qui correspondent à l'image photographiée depuis l'unité de stockage de données de carte (206a) en spécifiant un endroit qui correspond à une zone photographiée de l'image photographiée en se référant aux données de carte stockées dans l'unité de stockage de données de carte (206a) d'après au moins l'un d'une chaîne de caractères, d'un agencement de la chaîne de caractères, et d'un symbole qui sont inclus dans le contenu d'affichage.

4. Système de navigation (200) selon l'une quelconque des revendications 1 à 3,
dans lequel l'unité de stockage (206) inclut en outre une unité de stockage d'informations d'agencement de chaîne de caractères (206c) qui stocke des informations d'agencement de chaîne de caractères concernant une chaîne de caractères de la carte et un agencement de la chaîne de caractères, et
dans lequel l'unité d'identification d'image (202b) extrait les informations d'agencement de chaîne de caractères qui correspondent à au moins l'un de la chaîne de caractères et de l'agencement de la chaîne de caractères qui sont inclus dans le contenu d'affichage depuis l'unité de stockage d'informations d'agencement de chaîne de caractères (206c) et spécifie au moins une partie des données de carte qui correspondent à l'image photographiée depuis l'unité de stockage de données de carte (206a) d'après les informations d'agencement de chaîne de caractères extraites.

5. Système de navigation (200) selon l'une quelconque des revendications 1 à 4,
dans lequel l'unité de stockage (206) inclut en outre une unité de stockage d'informations de symbole (206d) qui stocke des informations de symbole qui concernent un symbole qui est utilisé dans la carte, et
dans lequel l'unité d'identification d'image (202b) extrait les informations de symbole qui correspondent au symbole inclus dans le contenu d'affichage depuis l'unité de stockage d'informations de symbole (206d) et spécifie au moins une partie des données de carte qui correspondent à l'image photographiée depuis l'unité de stockage de données de carte (206a) d'après les informations de symbole extraites.

6. Système de navigation (200) selon l'une quelconque des revendications 2 à 5,
dans lequel les informations de guidage incluent en outre des données de tableau horaire de moyens de transport, et
dans lequel l'unité de génération d'écran de guidage (202h) extrait les données de tableau horaire qui correspondent au nom de gare depuis l'unité de stockage d'informations de guidage (206b) et génère l'écran de guidage qui inclut les données de tableau horaire extraites lorsque les informations de nom réglées par l'unité de réglage d'informations de nom (202f) représentent le nom de gare.

7. Système de navigation (200) selon l'une quelconque des revendications 1 à 6,
dans lequel l'unité de stockage (206) inclut en outre une unité de stockage de données de réseau routier (206e) qui stocke des données de réseau routier,
dans lequel l'unité de réglage d'informations de nom (202f) règle les informations de nom qui correspondent à la zone sélectionnable sélectionnée à l'aide de l'unité d'affichage (414) par le biais de l'unité d'entrée (416) en tant que point de départ ou destination,
dans lequel l'unité de commande (202) inclut en outre une unité de recherche d'itinéraire de guidage (202g) qui recherche un itinéraire de guidage qui inclut le point de départ ou la destination réglé(e) par l'unité de réglage d'informations de nom (202f) à l'aide des données de réseau routier stockées dans l'unité de stockage de données de réseau routier (206e) et génère des données d'itinéraire de guidage, et
dans lequel l'unité de génération d'écran de guidage (202h) génère l'écran de guidage qui inclut les données d'itinéraire de guidage générées par l'unité de recherche d'itinéraire de guidage (202g).

8. Appareil terminal (100) qui est connecté à un serveur de navigation (200) de manière communicable, l'appareil comprenant :
une unité de photographie (120) ;
une unité d'affichage (114) ;
une unité d'entrée (116) ; et
une unité de commande (102),
dans lequel l'unité de commande (102) inclut :
une unité d'acquisition d'image photographiée (102a) qui acquiert une image photographiée en commandant l'unité de photographie (120) ;
une unité d'extraction de contenu d'affichage (102b) qui extrait le contenu d'affichage depuis l'image photographiée qui est acquise par l'unité d'acquisition d'image photographiée (102a) ;
une unité de transmission de contenu d'affichage (102c) qui transmet le contenu d'affichage qui est extrait par l'unité d'extraction de contenu d'affichage (102b) au serveur de navigation (200) ;
une unité de réception de données de carte (102d) qui reçoit les données de carte transmises depuis le serveur de navigation (200) ;
une unité de génération d'écran de fonctionnement (102e) qui génère un écran de fonctionnement, utilisé pour sélectionner l'endroit spécifique, ayant des zones d'affichage d'informations de nom qui sont incluses dans les données de carte réglées en tant que zones sélectionnables à l'aide des données de carte qui sont reçues par l'unité de réception de données de carte (102d) ;
une unité d'affichage d'écran de fonctionnement (102f) qui affiche au moins une partie de l'écran de fonctionnement qui est généré par l'unité de génération d'écran de fonctionnement (102e) sur l'unité d'affichage (114) ;
une unité de réglage d'informations de nom qui règle les informations de nom qui correspondent à la zone sélectionnable qui est sélectionnée à l'aide de l'unité d'affichage (114) par le biais de l'unité d'entrée (116) parmi les zones sélectionnables affichées par l'unité d'affichage d'écran de fonctionnement (102f) sur l'écran de fonctionnement en entrant une condition de recherche de données, l'unité d'entrée étant un panneau tactile ;
une unité de transmission d'informations de nom qui transmet les informations de nom qui sont réglées par l'unité de réglage d'informations de nom au serveur de navigation (200) ;
une unité de réception d'informations de guidage (102j) qui reçoit les informations de guidage qui sont transmises depuis le serveur de navigation (200) ;
une unité de génération d'écran de guidage (102k) qui génère un écran de guidage qui inclut au moins une partie des informations de guidage qui sont reçues par l'unité de réception d'informations de guidage (102j) ; et
une unité d'affichage d'écran de guidage (102m) qui affiche au moins une partie de l'écran de guidage qui est généré par l'unité de génération d'écran de guidage (102k) sur l'unité d'affichage (114).

9. Serveur de navigation (200) qui est connecté à un appareil terminal (100) de manière communicable, le serveur comprenant :
une unité de commande (202) ; et
une unité de stockage (206),
dans lequel l'unité de stockage (206) inclut :
une unité de stockage de données de carte (206a) qui stocke des données de carte d'une carte qui incluent au moins des informations de nom représentant des noms d'endroits spécifiques ; et
une unité de stockage d'informations de guidage (206b) qui stocke des informations de guidage des endroits spécifiques, et
dans lequel l'unité de commande (202) inclut :
une unité de réception de contenu d'affichage (202a) qui reçoit un contenu d'affichage d'une image photographiée qui est transmise depuis l'appareil terminal (100) ;
une unité d'identification d'image (202b) qui spécifie au moins une partie des données de carte qui correspondent à l'image photographiée depuis l'unité de stockage de données de carte (206a) d'après le contenu d'affichage qui est reçu par l'unité de réception de contenu d'affichage (202a) ;
une unité de transmission de données de carte (202c) qui transmet les données de carte qui sont spécifiées par l'unité d'identification d'image (202b) à l'appareil terminal (100) ;
une unité de réception d'informations de nom (202d) qui reçoit les informations de nom qui sont transmises depuis l'appareil terminal (100) ;
une unité d'extraction d'informations de guidage (202f) qui extrait les informations de guidage qui coïncident avec les informations de nom provenant de l'unité de stockage d'informations de guidage (206b) d'après les informations de nom qui sont reçues par l'unité de réception d'informations de nom (202d) ; et
une unité de transmission d'informations de guidage (202g) qui transmet les informations de guidage qui sont extraites par l'unité d'extraction d'informations de guidage (202f) à l'appareil terminal (100).

10. Produit programme d'ordinateur ayant des supports lisibles par ordinateur non transitoires incluant des instructions programmées pour un procédé de navigation exécuté par un appareil terminal (100) qui est connecté à un serveur de navigation (200) de manière communicable, l'appareil incluant une unité de photographie (120), une unité d'affichage (114), une unité d'entrée (116), et une unité de commande (102),
dans lequel les instructions, lorsqu'elles sont exécutées par l'unité de commande (102), amènent l'unité de commande (102) à exécuter :
une étape d'acquisition d'image photographiée (SA-1) consistant à acquérir une image photographiée en commandant l'unité de photographie (120) ;
une étape d'extraction de contenu d'affichage (SA-2) consistant à extraire le contenu d'affichage depuis l'image photographiée qui est acquise à l'étape d'acquisition d'image photographiée ;
une étape de transmission de contenu d'affichage (SA-3) consistant à transmettre le contenu d'affichage qui est extrait à l'étape d'extraction de contenu d'affichage au serveur de navigation (200) ;
une étape de réception de données de carte (SA-7) consistant à recevoir les données de carte transmises depuis le serveur de navigation (200) ;
une étape de génération d'écran de fonctionnement (SA-8) consistant à générer un écran de fonctionnement, utilisé pour sélectionner l'endroit spécifique, ayant des zones d'affichage d'informations de nom qui sont incluses dans les données de carte réglées en tant que zones sélectionnables à l'aide des données de carte qui sont reçues à l'étape de réception de données de carte ;
une étape d'affichage d'écran de fonctionnement (SA-9) consistant à afficher au moins une partie de l'écran de fonctionnement qui est généré à l'étape de génération d'écran de fonctionnement sur l'unité d'affichage (114) ;
une étape de réglage d'informations de nom (SA-12) consistant à régler les informations de nom qui correspondent à la zone sélectionnable qui est sélectionnée à l'aide de l'unité d'affichage (114) par le biais de l'unité d'entrée (116) parmi les zones sélectionnables affichées à l'étape d'affichage d'écran de fonctionnement sur l'écran de fonctionnement, l'unité d'entrée étant un panneau tactile ;
une étape de transmission d'informations de nom (SA-13) consistant à transmettre les informations de nom qui sont réglées à l'étape de réglage d'informations de nom au serveur de navigation (200) en entrant une condition de recherche de données ;
une étape de réception d'informations de guidage (SA-18) consistant à recevoir les informations de guidage qui sont transmises depuis le serveur de navigation (200) ;
une étape de génération d'écran de guidage (SA-19) consistant à générer un écran de guidage qui inclut au moins une partie des informations de guidage qui sont reçues à l'étape de réception d'informations de guidage ; et
une étape d'affichage d'écran de guidage (SA-20) consistant à afficher au moins une partie de l'écran de guidage qui est généré à l'étape de génération d'écran de guidage sur l'unité d'affichage (114).

11. Procédé de navigation exécuté par un serveur de navigation (200) incluant une unité de commande, et une unité de stockage (206) qui sont connectées à un appareil terminal (100) incluant une unité d'affichage (114) de manière communicable,
dans lequel l'unité de stockage (206) inclut :
une unité de stockage de données de carte (206a) qui stocke des données de carte d'une carte qui incluent au moins des informations de nom représentant des noms d'endroits spécifiques ; et
une unité de stockage d'informations de guidage (206b) qui stocke des informations de guidage des endroits spécifiques,
le procédé exécuté par l'unité de commande comprenant :
une étape de réception d'image photographiée (SB-3) consistant à recevoir une image photographiée qui est transmise depuis l'appareil terminal (100) ;
une étape d'identification d'image (SB-4) consistant à identifier un contenu d'affichage depuis l'image photographiée qui est reçue à l'étape de réception d'image photographiée et spécifie au moins une partie des données de carte qui correspondent à l'image photographiée depuis l'unité de stockage de données de carte (206a) d'après le contenu d'affichage identifié ;
une étape de génération d'écran de fonctionnement (SB-5) consistant à générer un écran de fonctionnement par le serveur de navigation (200), utilisé pour sélectionner l'endroit spécifique, ayant des zones d'affichage des informations de nom qui sont incluses dans les données de carte réglées en tant que zones sélectionnables à l'aide des données de carte réglées en tant que zones sélectionnables à l'aide des données de carte qui sont spécifiées à l'étape d'identification d'image ;
une étape de commande d'affichage d'écran de fonctionnement (SB-6 et 8) consistant à afficher l'écran de fonctionnement sur l'unité d'affichage (114) en transmettant l'écran de fonctionnement qui est généré à l'étape de génération d'écran de fonctionnement à l'appareil terminal (100) ;
une étape de réception d'informations de nom (SB-13) consistant à recevoir les informations de nom qui correspondent à la zone sélectionnable transmises depuis l'appareil terminal (100) ;
une étape de génération d'écran de guidage (SB-15) consistant à extraire les informations de guidage qui coïncident avec les informations de nom provenant de l'unité de stockage d'informations de guidage (206b) d'après les informations de nom qui sont reçues à l'étape de réception d'informations de nom et à générer un écran de guidage qui inclut au moins une partie des informations de guidage extraites ; et
une étape de commande d'affichage d'écran de guidage (SB-16 et 18) consistant à afficher l'écran de guidage sur l'unité d'affichage (114) en transmettant l'écran de guidage qui est généré à l'étape de génération d'écran de guidage à l'appareil terminal (100).

12. Produit programme d'ordinateur ayant des supports lisibles par ordinateur non transitoires incluant des instructions programmées pour un procédé de navigation exécuté par un serveur de navigation (200) incluant une unité de commande (202), et une unité de stockage (206) qui sont connectées à un appareil terminal (100) incluant une unité d'affichage (114) de manière communicable,
dans lequel l'unité de stockage (206) inclut :
une unité de stockage de données de carte (206a) qui stocke des données de carte d'une carte qui incluent au moins des informations de nom représentant des noms d'endroits spécifiques ; et
une unité de stockage d'informations de guidage (206b) qui stocke des informations de guidage des endroits spécifiques,
dans lequel les instructions, lorsqu'elles sont exécutées par l'unité de commande (202), amènent l'unité de commande (202) à exécuter :
une étape de réception d'image photographiée (SB-3) consistant à recevoir une image photographiée qui est transmise depuis l'appareil terminal (100) ;
une étape d'identification d'image (SB-4) consistant à identifier un contenu d'affichage depuis l'image photographiée qui est reçue à l'étape de réception d'image photographiée et à spécifier au moins une partie des données de carte qui correspondent à l'image photographiée depuis l'unité de stockage de données de carte (206a) d'après le contenu d'affichage identifié ;
une étape de génération d'écran de fonctionnement (SB-5) consistant à générer un écran de fonctionnement, utilisé pour sélectionner l'endroit spécifique, ayant des zones d'affichage des informations de nom qui sont incluses dans les données de carte réglées en tant que zones sélectionnables à l'aide des données de carte qui sont spécifiées au niveau de l'unité d'identification d'image ;
une étape de commande d'affichage d'écran de fonctionnement (SB-6 et 8) consistant à afficher l'écran de fonctionnement sur l'unité d'affichage (114) en transmettant l'écran de fonctionnement qui est généré au niveau de l'unité de génération d'écran de fonctionnement à l'appareil terminal (100) ;
une étape de réception d'informations de nom (SB-13) consistant à recevoir les informations de nom qui correspondent à la zone sélectionnable transmises depuis l'appareil terminal (100) ;
une étape de génération d'écran de guidage (SB-15) consistant à extraire les informations de guidage qui coïncident avec les informations de nom provenant de l'unité de stockage d'informations de guidage (206b) d'après les informations de nom qui sont reçues au niveau de l'unité de réception d'informations de nom et à générer un écran de guidage qui inclut au moins une partie des informations de guidage extraites ; et
une étape de commande d'affichage d'écran de guidage (SB-16 et 18) consistant à afficher l'écran de guidage sur l'unité d'affichage (114) en transmettant l'écran de guidage qui est généré au niveau de l'unité de génération d'écran de guidage à l'appareil terminal (100).
